# EUROPÄISCHE PATENTSCHRIFT

(11) **EP 3 939 344 B1**
(45) Veröffentlichungstag und Bekanntmachung des Hinweises auf die Patenterteilung: **03.07.2024**
(21) Anmeldenummer: 20712202.9
(22) Anmeldetag: 12.03.2020
(51) Int. Cl.: H04W 8/20, H04W 8/18

(54) **VERFAHREN ZUM BEREITSTELLEN VON SUBSKRIPTIONS-PROFILEN, TEILNEHMERIDENTITÄTSMODUL UND SUBSKRIPTIONS-SERVER**
METHOD FOR PROVIDING SUBSCRIPTION PROFILES, SUBSCRIBER IDENTITY MODULE AND SUBSCRIPTION SERVER
PROCÉDÉ DE MISE À DISPOSITION DE PROFILS DE SOUSCRIPTION, MODULE D'IDENTITÉ DE PARTICIPANT ET SERVEUR DE SOUSCRIPTION

(30) Priorität: 15.03.2019 DE 102019001840
(43) Veröffentlichungstag der Anmeldung: 19.01.2022
(73) Patentinhaber: Giesecke+Devrient Mobile Security Germany GmbH, 81677 München (DE)
(72) Erfinder: NITSCH, Nils, 85570 Markt Schwaben (DE)
(74) Vertreter: Giesecke+Devrient IP
(86) Internationale Anmeldenummer: PCT/EP2020/025130
(87) Internationale Veröffentlichungsnummer: WO 2020/187450

(56) Entgegenhaltungen:
- WO-A1-2016/128141
- WO-A1-2016/193414
- DE-A1-102014 019 089
- DE-A1-102015 008 179
- US-A1- 2016 021 529
- LUCENT TECHNOLOGIES: "Subscription management - Create User", 3GPP DRAFT; S5-032410 LU CREATEUSER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG5, Nr. Cork, Ireland; 20030703, 3. Juli 2003 (2003-07-03), XP050297097, [gefunden am 2003-07-03]

## Beschreibung

### TECHNISCHES GEBIET DER ERFINDUNG

Die Erfindung bezieht sich auf ein Verfahren zum Bereitstellen von Subskriptions-Profilen an ein Teilnehmeridentitätsmodul, bevorzugt eine eUICC, mittels eines Subskriptions-Servers, bevorzugt ein SM-DP, sowie ein Verfahren zum Verwalten von Subskriptionsprofilen in einem Teilnehmeridentitätsmodul, ein entsprechendes Teilnehmeridentitätsmodul, ein entsprechender Subskriptions-Server und ein Computerprogramm-Produkt.

Zur Nutzung von Diensten eines Kommunikationsnetzes enthält ein Endgerät, beispielsweise ein Mobiltelefon oder ein Maschine-zu-Maschine-Modul, englisch Machine-to-Machine-Module, kurz M2M-Modul, ein Teilnehmeridentitätsmodul. In dem Teilnehmeridentitätsmodul ist zumindest ein Subskriptions-Profil, nachfolgend vereinfacht auch als Profil bezeichnet, enthalten. Das Profil umfasst Teilnehmeridentitätsdaten, um einen Teilnehmer am Kommunikationsnetz, beispielsweise einem Mobilfunknetz, zu identifizieren und zu authentisieren. Durch dieses Profil ist es einem Betreiber des Kommunikationsnetzwerks möglich, die Nutzung eines angebotenen Dienstes, beispielsweise eines Sprach- und/oder Datendienstes, jedem Teilnehmer im Kommunikationsnetzwerk eindeutig zuzuordnen. Weiterhin ist es dem Betreiber möglich, einen Netzzugang, also das Einbuchen in das Kommunikationsnetz, zu ermöglichen, sobald eine Authentisierung des Teilnehmers stattgefunden hat. Er kann zudem den Netzzugang verweigern, falls eine Authentisierung des Teilnehmers nicht möglich ist.

### TECHNISCHER HINTERGRUND

Heutige Teilnehmeridentitätsmodule sind dazu eingerichtet, ein Profil auch nach ihrer Herstellung zu empfangen, einzurichten, zu verwenden, zu aktualisieren, zu aktivieren, zu deaktivieren, zu löschen und/oder zu erweitern. Dies wird allgemein als Teilnehmeridentitätsverwaltung, auch Subskriptions-Management, bezeichnet. Ein Teilnehmeridentitätsmodul kann dabei mehrere unterschiedliche Profile aufweisen.

Änderungen an einem Profil erfordern dabei das Bereitstellen eines vollständigen Profils. Bei konventionellen Plug-In-SIM-Karten könnte die Profil-Änderung einfach durch Austausch der SIM-Karte im Endgerät durchgeführt werden. Alternativ wird ein neues Profil in dem Teilnehmeridentitätsmodul eingerichtet, was besonders bei Teilnehmeridentitätsmodulen durchgeführt wird, die nicht ohne Weiteres im Endgerät ausgetauscht werden können. Beim Einrichten eines Profils in einer eUICC wird eine Profil-Dateistruktur in dem Teilnehmeridentitätsmodul erstellt und Profil-Daten werden in einem nachgelagerten Schritt in diese Profil-Dateistruktur hineingeladen und dort installiert.

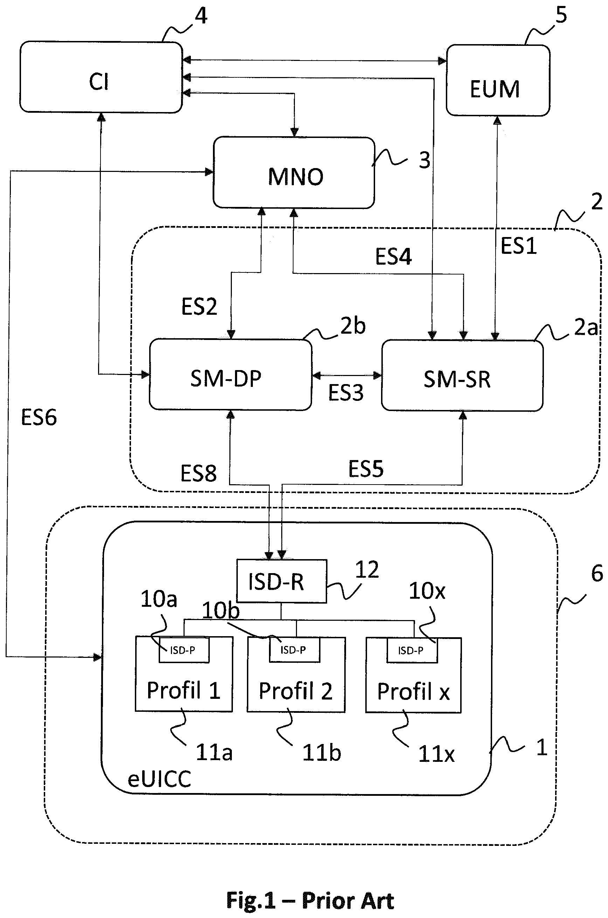

Die technischen GSMA Spezifikationen "12FAST.13 - Embedded SIM Remote Provisioning Architecture 17 Dezember 2013" - nachfolgend als technische Spezifikation [1] bezeichnet - und "SGP02-Remote-Provisioning-Architecture-for-Embedded-UICC-Technical-Spezifikation V2.0, 13 Oktober 2014" - nachfolgend als technische Spezifikation [2] bezeichnet - beschreiben eine derartige Verwaltung von Subskriptionen. Die technische Spezifikation [1] beschreibt dabei die Aufgaben und Funktionen, mittels derer ein Profil von einem Subskriptions-Server in eine eUICC geladen und dort installiert wird. Die technische Spezifikation [2] beschreibt den protokollarischen Ablauf beim Herunterladen und Installieren eines Subskriptions-Profils in eine eUICC. Fig. 1 zeigt vereinfacht ein System zum Verwalten von Profilen bzw. Teilnehmeridentitätsmodulen gemäß der technischen Spezifikationen [1] und [2]. Aspekte betreffend das Herunterladen und Installieren von Subskriptionen in eUICCs sind zudem in den technischen Spezifikationen [3] GSMA SGP.22 - RSP Technical Specification, Version 2.2, 01 September 2017, und [4] GSMA SGP.21 - RSP Architecture, Version 2, 01 September 2017, offenbart.

Ein Aktivieren eines Profil, ein Deaktivieren eines Profils, ein Löschen eines Profils, ein Erstellen eines Profils, ein Wechsel von einem ersten Profil auf ein zweites Profil und/oder das Aktualisieren eines vorhandenen Profils wird beispielsweise zu einem Zeitpunkt erforderlich, zu dem das Teilnehmeridentitätsmodul bereits an einen Teilnehmer ausgeliefert ist und ein Profil zum Nutzen von Diensten eines Kommunikationsnetzes verwendet wird. Darüber hinaus könnte der Teilnehmer zu einem Zeitpunkt nach der Auslieferung/Herstellung des Teilnehmeridentitätsmoduls wünschen, weitere Dienste des Kommunikationsnetzes oder eines anderen Kommunikationsnetzes zu nutzen. Derartige Vorgänge können nicht während einer Personalisierung bei der Herstellung von Teilnehmeridentitätsmodulen vorbereitet werden.

Wünschenswert ist eine Lösung zum Verwalten von Subskriptions-Profilen, bei welcher die Menge der an das Teilnehmeridentitätsmodul gesendeten Daten, insbesondere der zusätzlich zu den eigentlichen Profil-Daten eines Profils gesendeten Daten, stark reduziert ist.

Die DE 10 2012 018 540 A1 offenbart dazu ein Teilnehmeridentitätsmodul mit zwei identischen Profilen, bei denen immer nur eins aktiv sein darf. Somit kann ein Subskriptionswechsel weitgehend ohne OTA Übertragung von Daten vorgenommen werden. Unterschiedliche Profile können dabei aber nicht betrieben werden.

Die EP 2 802 162 A1 beschreibt eine SIM-Karte, in der eine Profil-Vorlage permanent eingebracht ist. Aus dieser Profil-Vorlage lassen sich mittels eines von einem Server an die SIM-Karte gesendeten Befehls Profil-Strukturen erzeugen. Diese Profil-Strukturen können in einem zweiten Schritt mit Profil-Daten befüllt werden. Diese Profil-Vorlage benötigt permanent Speicherplatz in der SIM-Karte. Dieser Speicherplatz steht sodann nicht mehr für Profile bereit.

Die DE 10 2012 020 690 A1 beschreibt eine eUICC, bei der verschiedene Profile abgelegt sind. Mittels einer Fernverwaltung werden Teilnehmeridentitätsdaten durch ein Ladekommando aktiviert, indem ein Link auf eine Datei umgeschrieben wird. Die Datei verbleibt dabei immer an ihrem Speicherort, wodurch Speicherzugriffe reduziert werden können. Es änderts sich lediglich der Aufruf der Datei. Auch hier wird eine permanent eingebrachte Profil-Vorlage benötigt.

Die WO 2016/128 141 A1 beschreibt eine eUICC mit einer lokalen Klonierungsfunktion. Die lokale Klonierungsfunktion der eUICC kopiert eine Profil-Dateistruktur eines vorhandenen ersten Profils und speichert diese als zweite Profil-Dateistruktur in der eUICC. In diese zweite Profil-Dateistruktur werden in einem Folgeschritt zweite Profil-Daten aufgenommen., um ein zweites Profil einzurichten.

Die WO 2016/193414 A1 beschreibt ein Verfahren zum Übertragen von Parameterdaten zwischen einem Telekommunikationsnetz und einem Telekommunikationsendgerät und zur Aktivierung und/oder Änderung und/oder Deaktivierung eines durch die Parameterdaten definierten Kommunikationsprofils auf dem Telekommunikationsendgerät. Das Telekommunikationsendgerät weist ein eUICC-Modul auf, wobei das eUICC-Modul die Funktionen einer eingebetteten universellen integrierten Schaltkreiskarte (eUICC, embedded Universal Integrated Circuit Card) bereitstellt, wobei mittels des eUICC-Moduls die Parameterdaten zur Nutzung des Telekommunikationsnetzes gemäß des Kommunikationsprofils in einem dem eUICC-Modul zugeordneten Speicherbereich gespeichert werden, wobei das Kommunikationsprofil sowohl einem Netzbetreiber des Telekommunikationsnetzes als auch dem Telekommunikationsendgerät oder einem Nutzer des Telekommunikationsendgeräts zugeordnet ist, wobei zur Übertragung der Parameterdaten zum Telekommunikationsendgerät und zur Aktivierung und/oder Änderung und/oder Deaktivierung des Kommunikationsprofils im eUICC-Modul des Telekommunikationsendgeräts die folgenden Schritte durchgeführt werden. In einem ersten Schritt werden die Parameterdaten vom Telekommunikationsnetz zum Telekommunikationsendgerät übertragen, wobei den Profildaten eine MIME-Typ-Information (Multipurpose Internet Mail Extensions Typ-Information) zugeordnet ist. In einem dem ersten Schritt nachfolgenden zweiten Schritt wird - basierend auf der MIME-Typ-Information - eine MIME-Handler-Anwendung des Telekommunikationsendgeräts derart aktiviert, dass mittels der Parameterdaten eine Aktivierung und/oder Änderung und/oder Deaktivierung des Kommunikationsprofils im Telekommunikationsendgerät dadurch erfolgt, dass die MIME-Handler-Anwendung einen zumindest teilweisen Zugriff auf das eUICC-Modul hat und eine Änderung und/oder Ergänzung des Inhalts des dem eUICC-Modul zugeordneten Speicherbereichs herbeiführt.

Manchmal unterscheiden sich zwei Profile nur geringfügig, wenn ein erstes Profil durch ein zweites Subskriptions-Profil ersetzt werden soll. Beispielsweise können nur einzelne Parameter oder Daten (nachfolgend als Teile von Profil-Daten bezeichnet) des zweiten Profils von einzelnen Parametern oder Daten des ersten Profils verschieden sein, wohingegen alle übrigen Parameter oder Daten des ersten Profils vollkommen identisch mit den Profil-Daten des zweiten Profils sind. Dennoch muss bislang stets ein vollständiges Profil heruntergeladen werden.

Manchmal soll ein vorhandenes aktives Profil nur um eine weitere Funktionalität erweitert werden oder auf eine aktuellere Version umgestellt werden. Bislang muss dabei stets das vollständige Profil neu erstellt und eingerichtet (geladen und installiert) werden. Dies verursacht ein hohes Datenaufkommen im Kommunikationsnetz. Zudem müssen zumindest Teile der Profil-Daten und ggf. auch der Profil-Dateistruktur neu zwischen zwei Systemkomponenten des in Fig. 1 gezeigten Systems (außerhalb des Teilnehmeridentitätsmoduls) ausgehandelt werden, beispielsweise OTA-Schlüssel oder sonstige Teilnehmeridentitätsdaten. Dieses Aushandeln verursacht zusätzliches Datenaufkommen im Kommunikationsnetz.

### ZUSAMMENFASSUNG DER ERFINDUNG

Der Erfindung liegt die Aufgabe zu Grunde, ein Teilnehmeridentitätsmodul bzw. Verfahren zu schaffen, die ein Bereitstellen und Verwalten von Subskription-Profilen im Teilnehmeridentitätsmodul mit einer noch geringeren Menge von an das Teilnehmeridentitätsmodul zu übertragenden Daten im Kommunikationsnetz erlaubt.

Die Aufgabe wird gelöst durch ein Teilnehmeridentitätsmodul nach einem der vorhergehenden Ansprüche gelöst. Vorteilhafte Ausgestaltungen der Erfindung sind in den abhängigen Ansprüchen angegeben.

Erfindungsgemäß wird ein Verfahren zum Bereitstellen von Subskriptions-Profilen an ein Teilnehmeridentitätsmodul, bevorzugt eine eUICC, mittels eines Subskriptions-Servers, bevorzugt eines SM-DP, vorgesehen. Dabei hat der Subskriptions-Server Kenntnis über ein im Teilnehmeridentitätsmodul installiertes erstes Subskriptions-Profil aufweisend eine erste Profil-Dateistruktur und in der ersten Profil-Dateistruktur abgespeicherte erste Profil-Daten. Im Subskriptions-Server laufen die folgenden Verfahrensschritte ab: Markieren zumindest eines Teils einer zweiten Profil-Dateistruktur eines zweiten Subskriptions-Profils; und Senden des zweiten Subskriptions-Profils zum Teilnehmeridentitätsmodul, wobei der markierte Teil des zweiten Subskriptions-Profils ohne zweite Profil-Daten gesendet wird, wobei im Senden-Schritt diejenigen ersten Profil-Daten des ersten Subskriptions-Profils angegeben werden, die zu kopieren sind, um als zweite Profil-Daten in den markierten Teil der zweiten Profil-Dateistruktur des zweiten Subskriptions-Profils abgespeichert zu werden.

Bei einem Teilnehmeridentitätsmodul im Sinne der Erfindung handelt es sich um ein in Baugröße und Ressourcenumfang reduziertes elektronisches Modul, welches einen Mikrocontroller und mindestens eine Datenschnittstelle zur Kommunikation mit dem Endgerät aufweist. Dieses Teilnehmeridentitätsmodul weist einen sicheren Speicherbereich auf, indem Teilnehmeridentitätsdaten sicher eingebracht sind, um Manipulation- und/oder Missbrauchsversuche bei der Identifizierung und/oder Authentisierung am Netzwerk zu verhindern. Das Teilnehmeridentitätsmodul ist mittels eines Endgeräts betriebsfähig, wobei das Modul bis auf Versorgungssignale, wie Versorgungsspannung, Takt, Reset etc. autark ist.

Bei dem Teilnehmeridentitätsmodul handelt es sich beispielsweise um eine Chipkarte, auch als Universal Integrated Circuit Card, kurz UICC, oder SIM-Karte bezeichnet. Das Teilnehmeridentitätsmodul dient dazu, mit den im sicheren Speicherbereich gespeicherten maschinenlesbaren Teilnehmeridentitätsdaten einen Teilnehmer in einem Kommunikationsnetz zu identifizieren und für das Nutzen von Diensten zu authentifizieren.

Alternativ handelt es sich bei dem Teilnehmeridentitätsmodul um einen integralen Bestandteil innerhalb des Endgeräts, beispielsweise als fest verdrahteter elektronischer Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ handelt es sich bei dem Teilnehmeridentitätsmodul um ein Machine-to-Machine-, kurz M2M-, Modul. Diese Module dienen der Fernüberwachung, -kontrolle und -wartung von Endgeräten wie Maschinen, Anlagen und Systemen. Sie können alternativ auch für Zähleinheiten wie Stromzähler, Warmwasserzähler etc. verwendet werden.

Alternativ ist das Teilnehmeridentitätsmodul als eine Softwarekomponente in einem vertrauenswürdigen Teil eines Betriebssystems, einer sogenannten Trusted Execution Environment, kurz TEE, des Endgerätes ausgebildet. Das Teilnehmeridentitätsmodul ist dann beispielsweise innerhalb einer gesicherten Laufzeitumgebung in Form von darin ablaufenden Programmen, sogenannten "Trustlets" ausgebildet.

Teilnehmeridentitätsdaten im Sinn der Erfindung sind beispielsweise Daten, die einen Teilnehmer eindeutig im Kommunikationsnetz identifizieren. Dazu zählt beispielsweise eine Teilnehmerkennung, auch International Mobile Subscriber Identity, kurz IMSI und/oder teilnehmerspezifische Daten. Die IMSI ist das in einem Mobilfunkkommunikationsnetzwerk eindeutige Teilnehmeridentitätsdatei. Sie setzt sich zusammen aus dem Landescode MCC (Mobile Country Code), dem Netzwerkcode MNC (Mobile Network Code) und einer laufenden Nummer, die vom Netzbetreiber vergeben wird.

Darüber sind Teilnehmeridentitätsdaten beispielsweise Daten, die einen Teilnehmer eindeutig am Kommunikationsnetz authentisieren, beispielsweise ein Authentisierungsalgorithmus, spezifische Algorithmus-Parameter, ein kryptografischer Authentisierungsschlüssel Ki und/oder ein kryptografischer Over-The-Air, kurz OTA, Schlüssel.

Ein Kommunikationsnetzwerk im Sinn der Erfindung ist eine technische Einrichtung, auf der die Übertragung von Signalen unter Identifizierung und/oder Authentisierung des Teilnehmers stattfindet, wodurch Dienste angeboten werden. Das Kommunikationsnetz ist bevorzugt ein Mobilfunknetz. Eine Gerät-zu-Gerät Kommunikation unter Aufsicht des Kommunikationsnetzes ist ebenfalls denkbar. Insbesondere wird hier ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation, das "Long Term Evolution", kurz LTE, als Vertreter der vierten Generation als Mobilfunknetz verstanden oder ein Mobilfunknetz der 5. Generation mit dem derzeitigen Arbeitstitel "5G" als ein Kommunikationsnetz verstanden.

Ein Dienst ist insbesondere ein Sprachdienst oder ein Datendienst, mit dem Informationen und/oder Daten über das Kommunikationsnetzwerk übertragen werden.

Ein Subskriptions-Server ist eine Komponente, die Teil des Kommunikationsnetzes ist oder mit ihm in Kommunikationsverbindung steht, um Teilnehmeridentitätsmodule zu verwalten, beispielsweise verschieden Profile zu erstellen ("create profile "), einzurichten ("profile download and installation"), zu aktivieren ("enable profile"), zu deaktivieren ("disable profile") und/oder zu löschen ("delete profile"). Der Subskriptions-Server ist beispielsweise in Serverkomponenten, beispielsweise einem Subscription Managing Secure Routing Server, SM-SR und einen Subscription Managing Data Preparation, SM-DP unterteilt, oder ist ein kombinierter SM-DP+ Server gemäß Spezifikation [3] SGP.21 oder [4] SGP.22, der SM-SR und SM-DP in dem einzigen Server SM-DP+ beinhaltet, wobei jeweils das erfindungsgemäße Verfahren bevorzugt mit einem SM-DP - bzw. dem SM-DP-Teil des SM-DP+ - durchgeführt wird. Die Kommunikation zwischen Subskriptions-Server und eUICC erfolgt bevorzugt über einen sicheren Kanal, beispielsweise SCP80 und SCP81, wie in ETSI 102 225 und/oder ETSI 102 226 definiert ist.

Das erfindungsgemäße Teilnehmeridentitätsmodul weist mindestens das erste Profil mit einer ersten Dateistruktur und darin installierten ersten Profildaten auf. Das Teilnehmeridentitätsmodul kann bereits weitere unterschiedliche Profile aufweisen. Installierte erste Profil-Daten sind insbesondere Profil-Daten, die vollständig auf dem Teilnehmeridentitätsmodul eingerichtet sind. Der Subskriptions-Server hat also während einer "download and installation" Prozedur gemäß technischer Spezifikationen [1] oder [2] eine "download complete" als Bestätigung erhalten hat, bzw.eine Notification gemäß [4] SGP.22, Kapitel 3.5, dass das erste Profil eingerichtet ist und alle Zustände eines Lebenszyklus eines Profils im Subskriptions-Management aufweisen kann.

Eine Dateistruktur im Sinne der Anmeldung ist insbesondere ein strukturierter profilbasierter Sicherheitsbereich, englisch profile security domain, beispielsweise ein ISD-P gemäß den technischen Spezifikationen [1] oder/und [2] oder [3] oder [4]. Jedem Profil eines Teilnehmeridentitätsmoduls sind eine Profil-Dateistruktur und darin abzulegende Profil-Daten eindeutig zugeordnet. Ein Profil ist dabei bevorzugt einem Teilnehmeridentitätsmodul eindeutig zugeordnet, sogenanntes "profile binding package". Auf einem Teilnehmeridentitätsmodul können mehrere Profile mit unterschiedlichen Profil-Dateistrukturen und darin abgelegten unterschiedlichen Profil-Daten nebeneinander existieren. Das Einrichten einer Profil-Dateistruktur ist nur mittels eines Subskriptions-Servers möglich, der entsprechende Zugriffsrechte für ein derartiges Einrichten mittels eines der Profil-Dateistrukturen übergeordneten teilnehmeridentitätsmodulbasierten Sicherheitsbereich aufweist, beispielsweise ein ISD-R gemäß den technischen Spezifikationen [1], [2], [3], [4]. Wenn eine neue (zweite) Profil-Dateistruktur auf dem Teilnehmeridentitätsmodul erstellt werden darf, beispielsweise für die Kommunikation über ein anderes (weiteres) Kommunikationsnetz oder das gleiche Netz mit anderen Dienstnutzungen, kann eine solche Dateistruktur (ISD-P) mit Hilfe des Subskriptions-Servers im Rahmen einer "create profile" Prozedur erstellt werden.

Jedes der in dem Teilnehmeridentitätsmodul eingerichteten Profile weist eine eigene Dateistruktur mit darin installierten Profil-Daten auf. Diese Profil-Daten ermöglichen den Aufbau, Betrieb und Abbau einer Verbindung des Endgeräts im Kommunikationsnetz. Die Profildaten eines Profils sind insbesondere Daten, die einen Teilnehmer eindeutig am Kommunikationsnetz identifizieren und authentisieren können, beispielsweise ein Authentisierungsalgorithmus, spezifische Algorithmus-Parameter, ein kryptografischer Authentisierungsschlüssel Ki, ein kryptografischer Over-The-Air (OTA) Schlüssel, eine Teilnehmerkennung, IMSI; eine Teilnehmeridentitätsmodulkennung, ICCID. Die Profil-Daten können auch Anwendungen sein, die diesem Profil eindeutig zuzuordnen sind, beispielsweise eine Authentisierungsanwendung, eine Signieranwendung, oder eine Verschlüsselungsanwendung.

Insbesondere sind erste Profil-Daten in einer ersten Profil-Dateistruktur eines ersten Profils installiert. Ein Teil dieser ersten Profil-Daten kann erfindungsgemäß in einer zweiten Dateistruktur eines zweiten Profils installiert werden (nachfolgend auch als Kopieren und Abspeichern bezeichnet). Damit wird dieser Teil der ersten Profil-Daten als Teil der zweiten Profildaten weiterverwendet. Durch das Weiterverwenden dieses Teils der Profil-Daten kann ein Datenaufkommen im Kommunikationsnetz eingespart werden, da einerseits dieser Teil der Profildaten nicht vom Server zum Teilnehmeridentitätsmodul transportiert (übertragen) werden muss und andererseits, dieser Teil der zweiten Profil-Daten nicht im System gemäß Fig. 1 zwischen unterschiedlichen Systemkomponenten ausgehandelt oder generiert werden muss.

Die Profil-Daten weisen beispielsweise mindestens einen Ordner (Directory File, DF) und mindestens eine Elementardatei (Elementary File, EF) auf. In diese DF und EF sind möglicherweise der Authentisierungsalgorithmus, spezifische Algorithmus-Parameter, der Ki, der OTA Schlüssel, die IMSI, die ICCID untergebracht. Der Authentisierungsalgorithmus, die spezifischen Algorithmus-Parameter, der Ki, der OTA Schlüssel, die IMSI, die ICCID etc. können statt in DFs und EFs alternativ auch als Objekte oder anderweitig, ohne File-System-Struktur, im Speicher abgelegt sein.

Als ein (zu markierender bzw. markierter) Teil einer Profil-Dateistruktur wird bevorzugt eine Untermenge der gesamten zweiten Profil-Dateistruktur eines zweiten Profils bezeichnet. Dieser Teil kann wiederum die Gesamtheit oder auch nur eine Untermenge einer gesamten ersten Profil-Dateistruktur eines ersten Profils umfassen. Beispielsweise umfasst das zweite Profil die Gesamtheit der Profil-Dateistruktur des (bereits in dem Teilnehmeridentitätsmodul installierten) ersten Profils und darüber hinaus noch Funktionserweiterungen oder Aktualisierungen. Der bereits installierte Teil eines ersten Profils wird nun erfindungsgemäß nicht beim Senden des zweiten Profils gesendet, sondern in dem Teilnehmeridentitätsmodul lokal vom ersten Profil kopiert.

Das Markieren erfolgt also für einen Teil der zweiten Profil-Dateistruktur, in dem normalerweise zweite Profil-Daten eingerichtet würden. Da diese zweiten Profil-Daten nach Kenntnis des Servers bereits in der ersten Profil-Dateistruktur als erste Profil-Daten im ersten Profil des Teilnehmeridentitätsmoduls vorhanden sind, kann ein erneutes Senden an das Teilnehmeridentitätsmodul unterbleiben. Damit ist es möglich, bereits installierte Profil-Daten, weiterzuverwenden, ohne dass diese erneut vom Server bereitgestellt werden müssen und/oder ohne dass diese zwischen Systemkomponenten ausgehandelt werden müssen. Dies verringert das Datenaufkommen beim Bereitstellen eines neuen Profils. Zudem wird der Aufwand zur Synchronisation von zu synchronisierenden Strukturen verringert. Zu aktualisierende Strukturen sind z.B. Zähler wie der OTA-Zähler, der die Anzahl OTA-Einwahlen des Teilnehmeridentitätsmoduls zählt, und der Authentisierungszähler, welcher die Anzahl der mit dem Teilnehmeridentitätsmodul bereits durchgeführten Authentisierungen zählt. Zudem kann ein Nutzer beispielsweise seine PIN mitnehmen, mit welcher der Zugang zum Teilnehmeridentitätsmodul beschränkt ist, insbesondere eine eventuell geänderte PIN.

Der markierte Teil der zweiten Dateistruktur betrifft erste Profil-Daten für das zweite Profil, die bereits im Teilnehmeridentitätsmodul installiert sind. Diese ersten Profil-Daten können in einem oder in mehreren eingerichteten Profilen des Teilnehmeridentitätsmoduls installiert sein.

Die zweite Profil-Dateistruktur des zweiten Profils wird entsprechend markiert. Beispielsweise wird in die zweite Profil-Dateistruktur anstelle der zweiten Profil-Datei ein Hinweis als die Markierung eingebracht. Dieser Hinweis umfasst eine Information von welchem Teil eines bereits auf dem Teilnehmeridentitätsmodul installierten Profils dieser markierte Teil der Profil-Dateistruktur kopiert werden kann. Der Hinweis ist vom Teilnehmeridentitätsmodul interpretierbar und führt das Teilnehmeridentitätsmodul zu den zu den nicht-gesendeten zweiten Profildaten entsprechenden ersten Profildaten.

Beispielsweise ist die Markierung eine Kennzeichnung in der zweiten Profil-Dateistruktur, beispielsweise ein gesetztes Flag für eine Profil-Datei. Jede Kennzeichnung zeigt dem Teilnehmeridentitätsmodul an, dass für diese spezielle zweite Profil-Datei eine erste Profil-Datei eines bereits vorhandenes (installierten) ersten Profils zu verwenden ist.

Die zweiten Profildaten der zweiten Profil-Dateistruktur werden nicht mitgesendet. Das zweite Profil ist demnach beim Empfang im Teilnehmeridentitätsmodul unvollständig und kann in dieser unvollständigen Form noch nicht für ein Authentisieren/Identifizieren am Kommunikationsnetz verwendet werden.

Während bzw. mit dem Senden wird vom Server angegeben, wo sich die (nicht-gesendeten) fehlenden Profil-Daten des zweiten Profils auf dem Teilnehmeridentitätsmodul befinden. Diese Angabe wird vom Teilnehmeridentitätsmodul dahingehend interpretiert, dass die angegebenen ersten Profildaten zu kopieren sind und in der zweiten Dateistruktur als zweite Profil-Daten abzuspeichern sind. Nachdem alle ersten Profil-Daten auch in der zweiten Profil-Dateistruktur abgelegt wurden, ist das zweite Profil vollständig. Diese Angabe kann beispielsweise eine Liste von ersten Profil-Daten sein, die vom Teilnehmeridentitätsmodul nacheinander abgearbeitet wird, um ggf. eine Mehrzahl von ersten Profildaten aus einem vorhandenen ersten (oder mehreren) Profil(en) zu kopieren.

Alternativ oder zusätzlich zu einer Liste kann auch eine Regel definiert werden, dass die fehlenden Profil-Daten des markierten Teils der zweiten Profil-Dateistruktur automatisch aus einem vorhandenen Profil, beispielsweise dem derzeit aktivierten Profil, kopiert werden, um das zweite Profil zu vervollständigen.

Das Kopieren erfolgt beispielsweise während einer Installieren-Prozedur gemäß der technischen Spezifikationen [1] und [2] und wird durch ein Applet des Teilnehmeridentitätsmoduls realisiert.

Wird beispielsweise ein erstes Profil lediglich aktualisiert oder erweitert, ist es nunmehr möglich, bereits ausgehandelte Identifizierungs- und Authentisierungsdaten, wie (IMSI, ICCID; Ki, OTA, etc.) auch für ein - zum ersten Profil erweitertes - zweites Profil weiterzuverwenden. Damit wird in dem Teilnehmeridentitätsmodul zunächst ein zweites unvollständiges Profil empfangen und mittels einer Kopier- und Abspeicherungs-Funktion in der eUICC vervollständigt. Aufwendiges Erzeugen des markierten Teils der Profil-Daten der zweiten Profil-Dateistruktur kann dabei entfallen, beispielsweise kann ein bereits ausgehandeltes OTA-Schlüsselpaar weiterverwendet werden, die ausgehandelten Authentisierungsparameter bleiben auch für das zweite Profil gültig. Auf komplexe Anpassungen von Sicherheitsbereichen oder Applikationen in der Kommunikationsnetz-Infrastruktur verzichtet werden.

Das erste Profil ist ein Profil, welches auf dem Teilnehmeridentitätsmodul vollständig eingerichtet ist. Es ist bevorzugt das aktivierte Profil. Alternativ ist unter dem ersten Profildaten ein aus verschiedenen eingerichteten Profilen des Teilnehmeridentitätsmoduls zusammengesetzter Datensatz gefasst.

Der Subskriptions-Server ist dabei eine Fernverwaltung des Teilnehmeridentitätsmoduls, insbesondere gemäß der Definition aus den technischen Spezifikationen [1] und [2].

Das Teilnehmeridentitätsmodul weist erfindungsgemäß alle zum Kopieren der Profil-Daten benötigten Zugriffsrechte auf, es kann insbesondere für das Erstellen des zweiten Profils auf unterschiedliche erste Profile des Teilnehmeridentitätsmodul zugreifen. Entsprechende Rechte-Regeln in den technischen Spezifikationen [1] und [2] sind dabei ggf. abzuändern.

In einer bevorzugten Ausgestaltung umfasst das Verfahren zudem die Schritte: Empfangen einer Bestätigung vom Teilnehmeridentitätsmodul, dass die diejenigen ersten Profil-Daten kopiert wurden und dass die kopierten ersten Profil-Daten in den markierten Teil der zweiten Profil-Dateistruktur des zweiten Subskriptions-Profils abgespeichert wurden; und Senden eines Profil-Aktivieren Kommandos an das Teilnehmeridentitätsmodul zum Aktivieren des zweiten Subskriptions-Profils. Die Bestätigen kann beispielsweise im Rahmen einer "Download complete" Bestätigung in der "download and installation" Prozedur gemäß der technischen Spezifikationen [1] und [2] durch die eUICC erfolgen.

Das Senden des Profil-Aktivieren Kommandos an das Teilnehmeridentitätsmodul zum Aktivieren des zweiten Subskriptions-Profils bewirkt bevorzugt ein automatisches Deaktivieren des ersten Profils. Ein Umschalten zwischen zwei Profilen ist somit erfolgt.

Bevorzugt umfasst das Verfahren weiter das Senden eines Löschen-Kommandos an das Teilnehmeridentitätsmodul zum Löschen derjenigen zumindest ersten Profil-Datei des ersten Subskriptions-Profils. Damit ist sichergestellt, dass auf der eUICC keine zwei Profile mit gleichen sicherheitsrelevanten Profil-Daten abgelegt sind. Ein sogenanntes Klonen ist damit unterbunden.

Bevorzugt ist der markierte Teil der zweiten Dateistruktur des zweiten Subskriptions-Profils zumindest eines der folgenden Elemente: zumindest eine Profil-Elementardatei; eine Teilnehmerkennung (IMSI); eine Teilnehmeridentitätsmodulkennung (ICCID); ein Authentisierungsschlüssel (Ki); ein OTA-Schlüssel; eine Subskription-Profil Anwendungsaktualisierung; und/oder eine Subskription-Profil-Datei-Aktualisierung.

In einem weiteren Aspekt betrifft die Erfindung ein Verfahren zum Verwalten von Subskriptionsprofilen in einem Teilnehmeridentitätsmoduls, bevorzugt eine embedded UICC, wobei im Teilnehmeridentitätsmodul zumindest ein erstes Subskriptions-Profil installiert ist und wobei das erste installierte Subskription-Profil eine erste Profil-Dateistruktur und in der Dateistruktur abgespeicherte erste Profil-Daten umfasst. Im Teilnehmeridentitätsmodul laufen die folgenden Verfahrensschritte ab: Empfangen eines zweiten, unvollständigen Subskriptions-Profils von einem Subskriptions-Server unter Angabe von ersten Profil-Daten des ersten Subskriptions-Profils, die zu kopieren sind, und als zweite Profil-Daten in die zweite Profil-Dateistruktur des zweiten unvollständigen Subskriptions-Profils abzuspeichern sind; Kopieren der angegebenen ersten Profil-Daten des ersten Subskriptions-Profils; Abspeichern der kopierten angegebenen ersten Profil-Daten in der zweiten Profil- Dateistruktur des zweiten Subskriptions-Profils, um das zweite Subskriptions-Profil zu vervollständigen, wodurch das zweite Subskription-Profil eingerichtet ist; und Senden einer Bestätigung an den Subskriptions-Server, dass die angegeben ersten Profil-Daten in den markierten Teil der zweiten Profil-Dateistruktur des zweiten Subskriptions-Profils abgespeichert wurden.

Mit Kopieren und Abspeichern ist sowohl ein temporäres Vervielfältigen als auch ein bloßes Verschieben der entsprechenden Profil-Daten in die zweite Profil-Dateistruktur zu verstehen.

Das Kopieren erfolgt beispielsweise im Rahmen einer Installations-Prozedur gemäß der technischen Spezifikationen [1] und [2], wobei die Angabe beim Senden des zweiten Profils verwendet wird, um die entsprechenden (fehlenden) zweiten Profil-Daten aus einem bereits eingerichteten Profil zu kopieren und in der zweiten Profil-Dateistruktur abzulegen. Dazu können ggf. die Funktionen "Store Metadaten" etc. in Verbindung mit dem Kopieren der Profildaten verwendet werden.

Bevorzugt umfasst das Verfahren weiter ein Empfangen eines Profil-Aktivieren Kommandos vom Subskriptions-Server zum Aktivieren des zweiten Subskriptions-Profils; und ein Aktivieren des zweiten Subskriptions-Profils unter Deaktivieren des ersten Subskriptions-Profils.

Bevorzugt umfasst das Verfahren weiter ein Empfangen eines Löschen-Kommandos vom Subskriptions-Server zum Löschen zumindest der ersten Profil-Daten des ersten Subskriptions-Profils. Damit bleibt die erste Dateistruktur erhalten und kann für ein einzurichtendes weiteres (drittes) Profil genutzt werden. Alternativ kann auch das gesamte erste Profil gelöscht werden.

Bevorzugt wird das Kopieren der angegebenen ersten Profil-Daten und das Abspeichern der kopierten angegebenen ersten Profil-Daten in die zweite Profil-Dateistruktur des zweiten Subskriptions-Profils ohne Übertragung von Daten, insbesondere Profil-Daten, zwischen dem Teilnehmeridentitätsmodul und dem Subskriptions-Server durchgeführt.

Bevorzugt umfassen die Verfahrensschritte eine Erstellen-Funktion ("create profile") und/oder eine Aktivieren-Funktion ("enable profile") und/oder eine Deaktivieren-Funktion ("disable profile") gemäß der technischen Spezifikationen [1] und [2].

In einem weiteren Aspekt ist ein Teilnehmeridentitätsmodul, eingerichtet für ein oder umfassend ein im Teilnehmeridentitätsmodul installiertes erstes Subskriptions-Profil vorgesehen, wobei das erste installierte Subskription-Profil eine erste Profil-Dateistruktur und in der Profil-Dateistruktur abgespeicherte erste Profil-Daten umfasst. Das Teilnehmeridentitätsmodul umfasst eine Kopier- und Abspeichern-Funktion, die dazu eingerichtet ist, nach einem Empfangen eines zweiten, unvollständigen Subskriptions-Profils von einem Subskriptions-Server unter Angabe von ersten Profil-Daten des ersten Subskriptions-Profils, die angegebenen ersten Profil-Daten des ersten Subskriptions-Profils in eine zweite Profil-Dateistruktur eines zweiten unvollständigen Subskriptions-Profils zu kopieren, um das zweite Subskriptions-Profil zu vervollständigen, wodurch das zweite Subskriptions-Profil im Teilnehmeridentitätsmodul eingerichtet ist.

Die Kopier- und Abspeichern-Funktion ist bevorzugt durch eine Funktionalität des Betriebssystems realisiert, die nach dem Empfang des zweiten, unvollständigen Subskriptions-Profils gestartet wird. Eine Funktionalität des Betriebssystems ist bevorzugt, da gerade sensitive Daten verschlüsselt abgespeichert werden, und es Vorteile hat, wenn Applets keinen Zugriff auf solche Daten haben. Die Kopier- und Abspeichern-Funktion kann aber alternativ auch durch ein Applet realisiert sein, welches eingerichtet ist, nach dem Empfangen des zweiten, unvollständigen Subskriptions-Profils zu starten, mit den oben beschriebenen Nachteilen, aber dem Vorteil größerer Flexibilität. Wahlweise ist die Kopier- und Abspeichern-Funktion ist durch eine Funktionalität des Betriebssystems realisiert, und die Funktionalität (Kopier- und Abspeichern-Funktion) des Betriebssystems wird durch ein Applet lediglich ausgelöst, nachdem der Empfang des zweiten, unvollständigen Subskriptions-Profils erfolgt ist; das Ausführen der Funktionalität erfolgt hingegen durch das Betriebssystem, und nicht durch das Applet.

Bevorzugt umfasst das Teilnehmeridentitätsmodul einen Datenspeicher zum Abspeichern der Subskriptions-Profile; eine Schnittstelle, die eingerichtet ist zur Kommunikation mit dem Subskriptions-Server, bevorzugt über ein Endgerät, welches das Teilnehmeridentitätsmodul aufweist; und eine Schnittstelle, die eingerichtet ist zur Kommunikation mit einem Netzwerk-Server. Zudem sind Mittel, die eingerichtet sind, das vorhergehend beschriebene Verfahren durchzuführen, vorgesehen.

Bei einem Endgerät im Sinn der Erfindung handelt es sich prinzipiell um ein Gerät oder eine Gerätekomponente, welches Mittel zur Kommunikation mit dem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu fassen. Unter dem Endgerät können beispielsweise auch Multimedia-Endgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen welche Mittel, insbesondere Mobilfunkmodems, zur Kommunikation mit dem Kommunikationsnetzwerk aufweisen.

In einem weiteren Aspekt ist ein Subskriptions-Server, bevorzugt ein SM-DP, eingerichtet zum Bereitstellen von Subskriptions-Profilen für ein Teilnehmeridentitätsmodul, bevorzugt eine eUICC, vorgesehen, wobei der Subskriptions-Server Kenntnis über ein im Teilnehmeridentitätsmodul installiertes erstes Subskriptions-Profil aufweisend eine erste Profil-Dateistruktur und in der ersten Profil-Dateistruktur abgespeicherte erste Profil-Daten hat. Der Server umfasst eine Markier-Funktion, die dazu eingerichtet ist, zumindest einen Teil einer zweiten Profil-Dateistruktur eines zweiten Subskriptions-Profils zu markieren und eine Sende-Funktion, die dazu eingerichtet ist, das zweite unvollständige Subskriptions-Profil zu senden, wobei der markierte Teil des zweiten Subskriptions-Profils ohne zweite Profil-Daten gesendet wird, wobei die Sende-Funktion diejenigen ersten Profil-Daten des ersten Subskriptions-Profils angibt, die zu kopieren sind, um als zweite Profil-Daten in den markierten Teil der zweiten Profil-Dateistruktur des zweiten Subskriptions-Profils abgespeichert zu werden.

Der Subskriptions-Server umfasst weiter eine Erkennen-Funktion, die dazu eingerichtet ist, den zu markierenden Teil der zweiten Dateistruktur zu erkennen, eine Schnittstelle, die eingerichtet ist zur Kommunikation mit dem Teilnehmeridentitätsmodul, bevorzugt über ein Endgerät, welches das Teilnehmeridentitätsmodul aufweist; eine Schnittstelle, die eingerichtet zur Kommunikation mit einem Netzwerk-Server; und Mittel, die eingerichtet sind, das vorhergehende Verfahren durchzuführen.

Zudem ist ein Computerprogramprodukt vorgesehen, welches ausführbar installiert in einem Teilnehmeridentitätsmodul und aufweisend Mittel zum Ausführen der Verfahrensschritte einer der vorhergehenden Verfahren ist. Bevorzugt ist das Computerprogrammprodukt ein Java Card Applet, welches in der eUICC zum Ausführen der Verfahrensschritte eingebracht ist.

Eine Funktion ist ein in dem Teilnehmeridentitätsmodul installierter ausführbarer Programmcode, der sich durch ein der Funktion entsprechendes Kommando, das an die Teilnehmeridentitätsmodul gesandt wird, zur Ausführung bringen lässt. Eine Funktion kann Teil eines Applets auf dem Teilnehmeridentitätsmodul sein. Mehrere Funktionen können durch ein Applet nacheinander aufgerufen werden.

Die Kopier- und Abspeichern-Funktion bzw. die entsprechenden Kopier- und abspeichere-Schritte sind somit in der Lage, ohne OTA-Verbindung, innerhalb des Teilnehmeridentitätsmoduls durch Kopieren der ersten Profil-Daten in eine zweite Profil-Dateistruktur, diese ersten Profil-Daten als zweite Profil-Daten anzulegen. Damit wird ein empfangenes unvollständiges zweites Profil vervollständigt. Die herkömmlicherweise erforderlichen Verbindungskosten für die Übertragung der zweiten Profildaten für das zweite Profil an das Teilnehmeridentitätsmodul und auch das ggf. notwendige Aushandeln neuer zweiter Profil-Daten für das zweite Profil können entfallen. Lediglich für ein erforderliches Übertragen der nicht im ersten Profil bereits installierten ersten Profil-Daten als zweiten Profildaten, mit denen das zweite Profil vervollständigt wird, um eingerichtet zu sein, fallen OTA- Verbindungskosten an.

Somit ist erfindungsgemäß ein Teilnehmeridentitätsmodul geschaffen, das ein Verwalten von Subskriptions-Profilen im Teilnehmeridentitätsmodul mit einer geringeren Menge von an das Teilnehmeridentitätsmodul zu übertragenden Daten erlaubt.

Beispielsweise weist das erste Subskriptions-Profil eine Mehrzahl von Profil-Elementardateien als erste Profi-Daten auf, wobei ein oder mehrere Profil-Elementardateien des ersten Subskriptions-Profils kopiert werden mittels der Kopier- und Abspeichern-Funktion.

Im Rahmen des Abspeicherns der ersten Profildaten als zweite Profildaten in der zweiten Dateistruktur kann zumindest eines der Profildaten an das zweite Profil angepasst werden, beispielsweise verändert werden oder beispielsweise auf Initialwerte zurückgesetzt werden.

Beispielsweise erfolgt die Kommunikation mittels SMS, HTTPS oder TCP Sitzungen (=Sessions).

Das Aktivieren/Deaktivieren eines Profils erfolgt beispielsweise mittels eines proaktiven Kommandos (REFRESH), welches von der eUICC an das Endgerät gesendet wird, um die eUICC neu zu starten.

Dem Senden des zweiten Profils geht beispielsweise ein Erstellen-Kommando voraus, so wie es in der GSMA-Spezifikation beschrieben ist.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt eine beispielhafte Ausführung eines Systems zum Verwalten von Teilnehmerprofilen gemäß den GSMA-Spezifikationen [1] und [2];
Fig. 2 zeigt ein erfindungsgemäßes Markieren von Teilen einer Profil-Dateistruktur eines Profils;
Fig. 3 zeigt ein Ausführungsbeispiel eines Ablaufdiagrams eines erfindungsgemäßen Verfahrens in einem Teilnehmeridentitätsmodul;
Fig. 4 zeigt ein Ausführungsbeispiel eines Ablaufdiagrams eines erfindungsgemäßen Verfahrens in einem Subskriptions-Server;
Fig. 5 zeigt ein Ausführungsbeispiel eines Ablaufdiagrams eines erfindungsgemäßen Verfahrens zwischen einem Teilnehmeridentitätsmodul und einem Subskriptions-Server.

### DETALLIERTE BESCHREIBUNG VON AUSFÜHRUNGSBEISPIELEN

Fig. 1 zeigt eine beispielhafte Ausführung eines Systems zum Verwalten von Teilnehmerprofilen 11a, 11b, 11x gemäß der oben erwähnten GSMA-Spezifikation [1] und [2].

Gemäß Fig. 1 wird eine eUlCC 1 durch den Server 2 fernadministriert. Die eUICC 1 ist dabei in einem Endgerät 6 fest- oder entnehmbar installiert. Eine eUICC 1 des Systems in Fig. 1 hat eine Sicherheitsdomäne (=SD) mit unterschiedlichen Privilegien und Konfigurationen für das Verwalten von den Teilnehmerprofilen 11a, 11b, llx, wie beispielsweise eine ISD-R 12, die durch eine Serverkomponente 2a (=Subscription Manager Secure Routing, kurz SM-SR) verwaltet wird. Eine eUICC-gesteuerte Sicherheitsdomäne, ECASD, kann ebenfalls aufgenommen werden, die durch einen Zertifikatsherausgebers 4 (=englisch Certificate Issuer, CI) auf der eUICC 1 verwaltet wird. Eine Dateistruktur eines Profils 11a, 11b, 11x wird durch die Serverkomponente 2b (=die Datenaufbereitung, englisch Subscription Manager Data Preparation SM-DP) verwaltet. In Fig. 1 sind drei Profile 11a, 11b, 11x dargestellt, von denen jedes eine Dateistruktur 10 (=ISD-P) aufweist und deren Profildaten innerhalb der Dateistruktur 10 durch den Server 2 verwaltet und gesichert wird. Die Anzahl der Profile 11a, 11b, 11x, die die eUICC 1 beinhalten kann, ist nicht auf drei beschränkt und kann mehr oder weniger betragen.

In Fig. 1 sind der SM-SR 2a und der SM-DP 2b als getrennte Serverkomponenten des Servers 2 dargestellt, sie werden nachfolgend aber als ein Server 2 betrachtet, analog zum Server SM-DP+ gemäß den Spezifikationen [3] und [4].

Pro eUICC 1 ist nur ein ISD-R 12 vorgesehen. Das ISD-R 12 kann von einem eUICC-Hersteller 5, (=eUICC-Manufacturer, EUM), während der Herstellung der eUICC 1 installiert und erstmals personalisiert werden. Nach der Herstellung der eUICC 1 befindet sich das ISD-R 12 im Lebenszykluszustand PERSONALISIERT. Das ISD-R 12 kann sodann TeilnehmerverwaltungsFunktionen auf jedem ISD-Ps 10 durchführen.

Pro Profil 11a, 11b, 11x ist eine Dateistruktur 10a, 10b, 10x (ISD-P) vorgesehen. Auf einer eUICC 1 ist zu jedem Zeitpunkt nur eine Dateistruktur 10a (ISD-P) aktiviert. Eine Dateistruktur 10a (ISD-P) wird vom ISD-R 12 installiert und dann mit dem Server 2 personalisiert. Mindestens eine Dateistruktur 10a (ISD-P) mit einem Profil 11a, 11b, 11x kann installiert und erstmals von der EUM 5 während der Herstellung von eUICC 1 personalisiert werden, um zukünftige eUICC-Konnektivität zu ermöglichen.

Außer dem ISD-R 12 hat keine Komponente außerhalb des ISD-P 10 Einsicht oder Zugriff auf eine Profilkomponente der Profile 11a, 11b, 11x. Das ISD-R 12 hat Lesezugriff auf Verbindungsparameter der einzelnen Profile 11a, 11b, 11x. Keine Profilkomponente ist von Komponenten außerhalb des jeweiligen Profils sichtbar oder zugänglich. Durch das ISD-R 12 wird es erfindungsgemäß ermöglicht, dass zum Installieren eines zweiten Profils auch auf Profil-Daten eines ersten Profils zugegriffen werden kann.

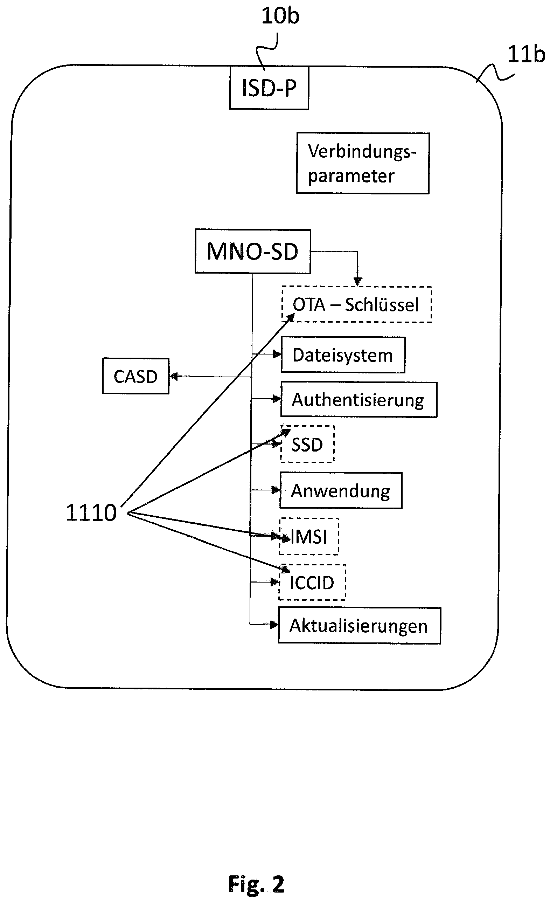

Eine Dateistruktur 10 bleibt während ihrer gesamten Lebensdauer dem ISD-R 12 zugeordnet, damit das ISD-R 12 folgende Teilnehmerverwaltungsfunktionen ausführen kann: Profilerstellung - die Zuordnung zwischen dem ISD-R 12 und einer Dateistruktur 10 kann jederzeit erstellt werden; Profillöschung; Profilaktivierung; Profildeaktivierung; Rückfallpositions-Einstellung; und Profiltransportfunktion. Die Struktur der Profile 11a, 11b, 11x wird in Fig. 2 gezeigt.

In Fig. 1 ist eine Vielzahl von Schnittstellen ESx des System vorgesehen:
Eine Schnittstelle ES8 adressiert Funktionen an die eUICC 1 über einen sicheren Kanal, der zwischen dem SM-DP 2b und der Dateistruktur 10 eines Profils 11 aufgebaut ist. Um das in sicherer Form zu ermöglichen, wird das Profil 11 mit mindestens einem Schlüsselsatz personalisiert. Die ES8 Schnittstelle wird durch einen sicheren Kanal realisiert, der durch einen sicheren Kanal zwischen dem SM-DP 2b und dem SM-SR 2a (=ES3-Schnittstelle) eingerichtet ist, und weiter durch einen sicheren Kanal SCP80 oder SCP81 zwischen dem SM-SR 2a über den ISD-R 12 bis in den ISD-P des betroffenen Profils 11 (Profi11 11a, Profi12 11b, ... bzw. Profilx 11x) getunnelt werden kann. Die Kommunikation wird dann vom ISD-P 10 (10a, lOb, ... 10x) entschlüsselt und an das jeweilige Profil 11 (11a, 11b, ... 11x) übergeben.

Die Schnittstelle ES6 adressiert Funktionen an die eUICC 1 über einen sicheren Kanal, der zwischen einem Mobilfunknetzbetreiber (Mobile network Operator, MNO) 3 und einer MNO-Sicherheitsdomäne eingerichtet wurde, die in jedem ISD-P 10 enthalten ist. Die eUICC 1 unterstützt die Ports SCP80 und SCP81 gemäß der Definition in ETSI 102 225 und ETSI 102 226 für diese E6-Schnittstelle. Die anfänglichen OTA-Schlüsselsätze sind Teil jedes Profils 11a, 11b, 11x und werden vom SM-DP 2b während eines Profil-Download- und Installationsvorgangs geladen oder von der EUM 5 geladen, bevor eUICC 1 ausgegeben wird.

Die Schnittstelle ES5 adressiert Funktionen an die eUICC 1 über einen sicheren Kanal, der zwischen dem SM-SR 2a und dem ISD-R 12 aufgebaut ist. Die eUICC 1 unterstützt SCP80 und SCP81, wie in ETSI 102 225 und ETSI 102 226 definiert ist, für diese E5-Schnittstelle. Um SCP80/SCP81 zu aktivieren, wird das ISD-R 12 vor der Ausgabe durch die EUM 5 mit entsprechenden Schlüsselsätzen personalisiert. Die Schlüsselsätze werden über die SM-SR 2a in das ISD-R 12 geladen; z.B. mittels Schnittstelle ES1.

Im System von Fig. 1 wird die OTA-Kommunikation ausschließlich von der SM-SR 2a übernommen. Die SM-SR 2a verwendet beispielsweise SMS, CAT_TP oder HTTPS für die Over-The-Air, OTA, Kommunikation mit der eUICC 1. Bei Verwendung von HTTPS unterstützen SM-SR 2a und eUlCC 1 eine Domain-Name-Auflösung, um eine IP-Adresse des SM-SR 2a auflösen zu können. In Long-Term-Evolution-Netzen unterstützt das System von Fig. 1 auch Kurznachrichten (=Short-Message-Service, SMS). Die SM-SR 2a ist frei in der Wahl des Übertragungsprotokolls entsprechend der Fähigkeiten der eUICC 1, des Endgeräts 6 und des ausführenden Servers 2. Die eUICC 1 unterstützt den Versand von sicheren Datenpaketen über SMS gemäß 3GPP TS 31.115.

Gemäß der technischen Spezifikation [1], Kapitel 3.3.1.2.2 "Profile Download and Installation Function" wird mit einer "Download" Funktion ein Profil in eine eUICC 1 geladen. Über "Download" hinaus sind jedoch weitere, begleitende Funktionen durchzuführen. Gemäß der technischen Spezifikation [1], Kap. 3.3.1.3.1 "ISD-P Creation Function" und der technischen Spezifikation [2], Kap. 3.1.1 "ISD-P Creation" werden "Create" Funktionen benötigt, um in der eUICC 1 eine Dateistruktur 10, insbesondere die ISD-P, anzulegen.

Gemäß der technischen Spezifikation [2], Kap. 3.1.3 "Download an Installation of the Profile" wird nach Anlegen der ISD-P ein Profil heruntergeladen und in der Dateistruktur, insbesondere der ISD-P, abgespeichert. Gemäß der technischen Spezifikation [1], Kapitel 3.3.1.2.3 "Profile Content Update Function" und Kapitel 3.3.1.2.4 "Policy Rules Update Function" werden "Update" Funktionen angewandt, um Aktualisierungen entsprechend dem neu heruntergeladenen Profil vorzunehmen. Gemäß der technischen Spezifikation [1], Kap. 3.3.1.3.4 "Profile Enabling Function" und der technischen Spezifikation [2], Kap. 3.2 "Profile Enabling" werden "Enable" Funktionen durchgeführt, um ein heruntergeladenes Profil zu aktivieren, insbesondere eine ISD-P, und hierdurch für den Nutzer der eUICC 1 verwendbar zu machen.

Gemäß der technischen Spezifikationen [1] und [2] sind also zusätzlich zur "Download" Funktion zumindest die drei zusätzlichen Funktionen "Create", "Update" und "Enable" anzuwenden, die einen massiven Overhead verursachen. Jede dieser Funktionen muss kostenverursachend über eine Over-The-Air, OTA, Verbindung vom Server 2 an die eUICC 1 aufgerufen bzw. gesendet werden. Beispielsweise müssen zum Herunterladen von zehn Kilobyte Profildaten in eine eUICC 1 schätzungsweise mindestens 20 Kilobyte (also ungefähr doppelt so viel) an Daten vom Server 2 via OTA an die eUICC 1 gesendet werden.

Fig. 2 zeigt ein erfindungsgemäßes Markieren von Teilen 1110 einer zweiten Profil-Dateistruktur 10b eines zweiten Profils 11b der Fig. 1. Die Dateistruktur 11b weist Profil-Daten auf. Beispielsweise kann eine der folgenden Komponenten als Profil-Datei enthalten sein in der Dateistruktur 11b: eine MNO-Sicherheitsdomäne (MNO-SD) mit den OTA-Schlüsselsätzen der MNO-Server 3; mindestens ein Authentisierungsparameter (Ki), eine Netzwerkzugriffsanwendung, Richtlinienregeln, ein Dateisystem beinhaltend Ordner (DF) und Elementardateien (EF); Verbindungsparameter des Profils, Anwendungen; eine Teilnehmerkennung, IMSI, eine Teilnehmeridentitätsmodulkennung ICCID, Profilaktualisierungen.

Erfindungsgemäß sind Teile 1110 der Profil-Daten 10b der Dateistruktur 10b des Profils 11b markiert. Diese markierten Teile 1110 sind in Fig. 2 gestrichelt dargestellt. Die Markierung erfolgt im Server 2, bevorzugt im SM-DP 2b, zeitlich bevor das Profil 11b in die eUICC 1 geladen wird. Gemäß Fig. 2 sind die markierten Teile 1110 des Profils 11b ein OTA-Schlüssel, eine SSD, eine IMSI und eine ICCID. Diese markierten Teile 1110 sind beim Senden des zweiten Profils 11b vom Server 2 an die eUICC 1 nicht im zweiten Profil 11b vorhanden. Somit ist dieser markierte Teil 1110 ein Platzhalter für erste Profildaten eines anderen - auf der eUICC 1 installierten - Profils 11a, 11x. Der markierte Teil 1110 kann nur eine Profil-Datei betreffen oder auch die gesamte Dateistruktur 10b. Die Menge der im markierten Teil 1110 befindlichen Profil-Daten ist nicht beschränkt.

Wenn ein Profil 11b von der eUICC 1 empfangen wird, werden Profildaten aus einem anderen Profil 11a, 11x der eUICC 1 angegeben. Diese angegeben Profil-Daten werden kopiert und an entsprechende Bereiche des markierten Teils 1110 des zweiten Profils 11b abgespeichert. Sind alle Profildaten im markierten Teil 1110 abgelegt, so gilt das zweite Profil 11b als vollständig eingerichtet. Der markierte Teil 1110 repräsentiert beim Empfang in der eUICC 1 also Lücken im unvollständigen Profil 11b, in die eine entsprechende Profil-Datei eines anderen Profils 11a, 11x hineingespeichert werden soll.

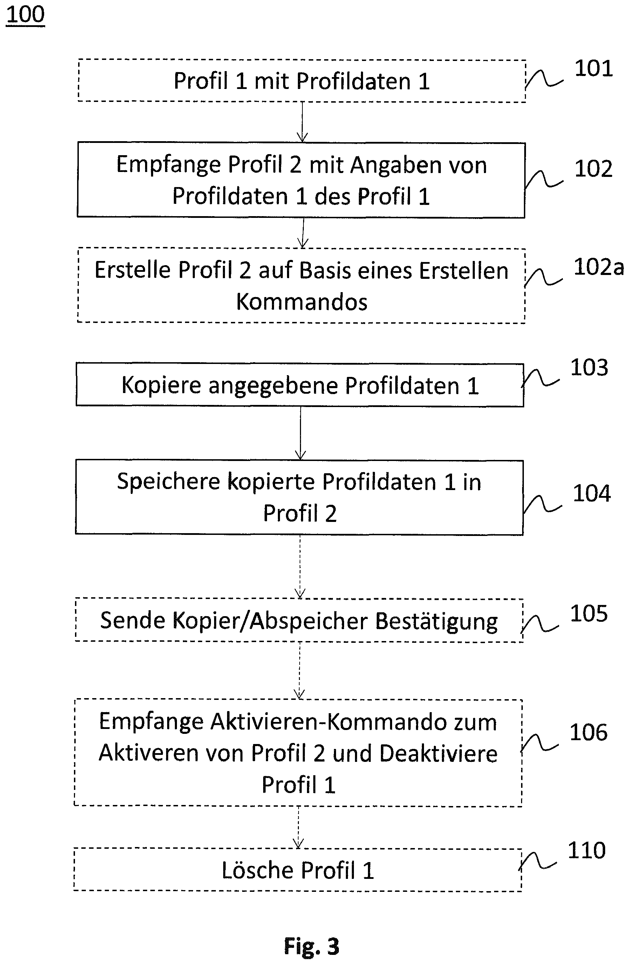

Auf diese Weise wird ein unvollständiges Profil geladen, welches mittels Markierung und Angabe der Profil-Daten anderer Profile auf der eUICC 1 durch die eUICC 1 unter Verwendung von Profil-Daten der eUICC 1 vervollständigt wird. Das entsprechende Verfahren dazu ist in den folgenden Figuren 3 bis 5 beschrieben.

Fig. 3 zeigt ein Ausführungsbeispiel eines Ablaufdiagrams eines erfindungsgemäßen Verfahrens 100 in einem Teilnehmeridentitätsmodul 1, nachfolgend als eUICC 1 bezeichnet.

Ein optionaler Schritt 101 stellt dar, dass die eUICC 1 ein erstes Profil 1 la mit ersten Profildaten innerhalb einer ersten Dateistruktur 10a aufweist. Die eUICC 1 empfängt im Schritt 102 ein zweites Profil 11b. Zudem empfängt die eUICC 1 im Schritt 102 Angaben von Profildaten aus dem ersten Profil 11a, die zum Vervollständigen des zweiten Profils 11b zu verwenden sind. Im optionalen Schritt 102a wird dazu mittels eines Erstellen-Kommando von einem Server 2, beispielsweise ein "create-Kommando" der technischen Spezifikationen [1] und [2], eine zweite Profil-Dateistruktur 10b für ein zweites Profil 11b aufgebaut.

Nach Erhalt des zweiten Profils 11b wird die eUICC 1 im Schritt 103 mittels einer Kopierfunktion in der eUICC 1 die angegebenen Profildaten des ersten Profils 11a kopieren. Nach dem Kopieren-Schritt 103 wird ein Abspeichern-Schritt 104 in der eUICC 1 ausgeführt, um die kopierten Profildaten des ersten Profils 11a an die jeweilige Stelle des zweiten Profils 11b in der eUICC 1 zu platzieren. Mit Blick auf die Fig. 2 wird nach dem Schritt 104 der OTA-Schlüssel des ersten Profils 11a auch als OTA-Schlüssel im zweiten Profil abgelegt sein. Weiterhin wird die IMSI des ersten Profils 11a auch als IMSI im zweiten Profil abgelegt sein. Weiterhin wird die ICCID des ersten Profils 11a auch als ICCID im zweiten Profil abgelegt sein. Weiterhin wird die SSD des ersten Profils 11a auch als SSD im zweiten Profil abgelegt sein.

Eine Vorschrift, welche Profil-Daten aus welchem Profil 11 an welche Stelle des zweiten Profils 11b abzulegen sind, wird als das erfindungsgemäße Angeben der Profildaten verstanden. Es kann hierbei eine Liste mit den zu kopierenden Profildaten mitgesendet werden. Die entsprechende Markierung der zweiten Dateistruktur 10b des zweiten Profils 11b kann mittels eines gesetzten Flags realisiert werden. Alternativ werden nicht-vorhandene zweite Profil-Daten (also Platzhalter) in einer Dateistruktur 10b des zweiten Profils 11b als Markierung interpretiert.

Am Ende des Schritts 104 ist ein vollständiges zweites Profil 11b in der eUICC 1 erhalten, wobei ein Teil der Profil-Daten des zweiten Profils 11b nicht beim Senden des zweiten Profils 11b von dem Server 2 mitgesendet wurden.

Im optionalen Schritt 105 erfolgt das Bestätigen des erfolgreichen Kopierens und Abspeicherns an den Server 2. Damit wird dem Server 2 angezeigt, dass nunmehr ein vollständiges zweites Profil 11b in der eUICC 1 vorhanden ist, das nach den gängigen Verfahren der technischen Spezifikationen [1] und [2] behandelt werden kann. Lediglich beispielhaft wird im Schritt 106 ein Aktivieren-Kommando empfangen, mit dessen Hilfe, das zweite Profil 11b aktiviert wird und fortan zur Nutzung von Diensten im Kommunikationsnetz des MNO Server 3 der Fig. 1 verwendet wird. In einem optionalen Schritt 110 wird das erste Profil 11a in der eUICC 1 gelöscht, um sicherzustellen, dass keine zwei Profile mit gleichen Teilnehmeridentitätsdaten (IMSI, ICCID, OTA Schlüssel, etc.) in der eUICC 1 abgelegt sind.

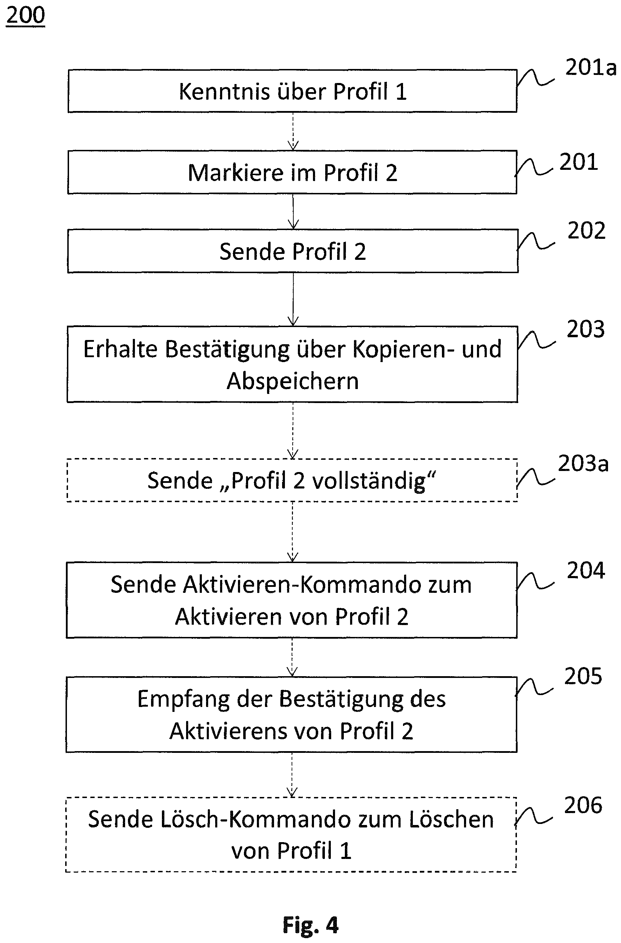

Fig. 4 zeigt ein Ausführungsbeispiel eines Ablaufdiagrams eines erfindungsgemäßen Verfahrens 200 in einem Subskriptions-Server 2. Der Server 2 ist in einem Schritt 201a in Kenntnis über die in der eUICC 1 befindlichen Profile 11 und kennt damit auch die erste Profil-Dateistruktur 10a und die ersten Profildaten des ersten Profils 11a.

In einem zu ladenden zweiten Profil 11b wird gemäß Schritt 201 zumindest ein Teil 1110 der zweiten Dateistruktur 10b des zweiten Profils 11b markiert. Das Ergebnis einer derartigen Markierung 1110 gemäß Schritt 201 ist in der Fig. 2 dargestellt, wo der markierte Teil 1110 der Profil-Dateistruktur 10b gestrichelt dargestellt ist. Im Schritt 202 wird das zweite Profil 11b an die eUICC 1 gesendet, wobei die Profildaten des markierten Teils 1110 der zweiten Dateistruktur 10b nicht gesendet wird. Dementgegen wird eine Angabe mitgesendet, welche Profildaten aus einem vorhanden Profil 11 der eUICC 1 zu kopieren und in den markierten Teil 1110 abzulegen sind. Der zu übertragende Datensatz - der das zweite Profil 11b repräsentiert - ist damit verkleinert.

Im Schritt 203 wird eine Bestätigung über einen erfolgreichen Kopier- und Abspeicher-Vorgang (Schritte 103, 104 der Fig. 3) erhalten. Damit ist dem Server 2 signalisiert worden, dass das zweite Profil 11b vollständig in der eUICC 1 vorhanden ist. Im Schritt 203a wird an den MNO-Server 3 gesendet, dass das zweite Profil 2 vollständig ist und eine entsprechende Aktivierung des zweiten Profils 11b nun jederzeit erfolgen kann.

Im Schritt 204 sendet der Server 2 ein Aktivieren-Kommando zum Aktivieren des zweiten Profils 11b unter gleichzeitiger Deaktivierung des ersten Profils 11a an die eUICC 1. Daraufhin empfängt der Server 2 im Schritt 205 eine Bestätigung der erfolgreichen Aktivierung durch die eUICC 1. Im Schritt 206 wird optional ein Löschen-Kommando an die eUICC 1 gesendet, um das erste Profil 1 1a zu löschen.

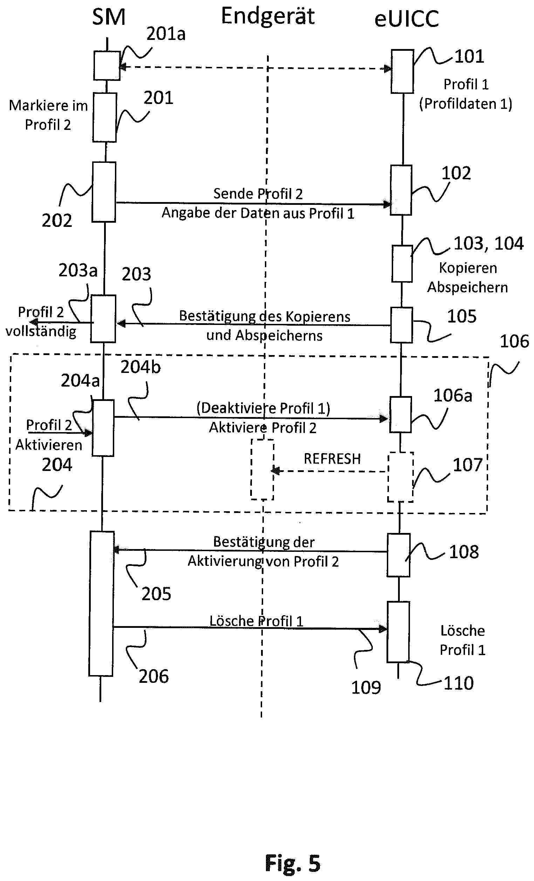

In Fig. 5 ist ein Ausführungsbeispiel eines Ablaufdiagrams eines erfindungsgemäßen Verfahrens zwischen einem Teilnehmeridentitätsmodul 1 und einem Subskriptions-Server 2 gezeigt. Fig. 5 vereint die beiden Verfahren 100 und 200 aus den vorhergehend beschriebenen Figuren 3 und 4. Auf eine Wiederholung des vorher dargestellten kann damit verzichtet werden.

Ausgangspunkt der Erfindung ist das Vorhandensein eines ersten Profils 11a mit einer ersten Dateistruktur 10a und ersten Profildaten in einer eUICC 1. Dieses Vorhandensein und auch der Inhalt des ersten Profils 11a ist dem Server 2 bekannt, siehe Schritt 201a. Im Schritt 201 wird ein vom ersten Profil 11a verschiedenes zweites Profil 11b markiert, siehe Ausführungen zu Fig. 2. Im Schritt 202 wird vom Server das zweite Profil 11b mit der markierten Datei-Struktur unter Angabe der Profildaten des ersten Profils 11a an die eUICC 1 über die Schnittstelle ES5 oder ES8 gesendet. Nach Empfang im Schritt 102 kopiert die eUICC 1 die Profildaten des ersten Profils 11a im Schritt 103 und speichert diese im Schritt 104 in der Dateistruktur 10b des zweiten Profils 11b entsprechend ab. Die eUICC 1 bestätigt das erfolgreiche Kopieren und Abspeichern im Schritt 105 (Schritt 203) als Zeichen der Vervollständigung des zweiten Profils llb an den Server 2 über die Schnittstellen ES5 oder ES8. Im Schritt 203a wird dieses Vervollständigen einem MNO-Server 3 über die Schnittstellen ES2 oder ES4 angezeigt. Im Schritt 204 erfolgt das Aktiveren des zweiten Profils 11b. Dazu erhält der Server 2 im Schritt 204a eine Aktivierungs-Aufforderung vom MNO-Server 3 über die Schnittstellen ES2 oder ES4. Daraufhin wird im Schritt 204b ein Aktivierungs-Kommando an die eUICC 1 gesendet. Im Schritt 106a wird das zweite Profil 11b aktiviert und (damit gleichzeitig) das erste Profil 11a deaktiviert. Im Rahmen der Aktivierung wird im Schritt 107 ein REFRESH proaktives Kommando an das Endgerät 6 gesendet, um die eUICC neu zu starten. Anschließend erfolgt im Schritt 108 ein Bestätigen der Aktivierung an den Server 2. Nach Empfang 205 des Bestätigung wird im Schritt 206 ein Löschen-Kommando vom Server 2 an die eUICC 1 über die Schnittstellen ES5 oder ES8 gesendet, um das erste Profil 11a zu löschen oder zumindest die Profildaten des ersten Profils 11a zu löschen. Dies wird von der eUICC 1 im Schritt 110 durchgeführt. Durch das Löschen wird sichergestellt, dass keine zwei gleichen Profildaten in einer eUICC 1 vorhanden sind.

Somit können innerhalb der eUICC 1 zwei Profile 11a, 11b definiert werden, ohne dass serverseitig die entsprechenden Sicherheits-Parameter (IMSI, ICCID, OTA, Ki, etc.) geklont werden müssen. Dieses Kopieren im Schritt 103 und Abspeichern im Schritt 104 in der eUICC 1 wird ermöglicht, da die eUICC 1 als Sicherheitselement als vertrauenswürdig für diese Daten eingestuft wird und somit keine serverseitige Sicherheit garantiert werden muss.

Auf diese Weise kann ein initiales, weniger Profildaten umfassendes erstes Profil 11a durch ein späteres, mehr Profildaten und damit einhergehend mehr Funktionalität aufweisendes zweites Profil 11b ersetzt werden, ohne dass bereits vorhandene Profildaten erneut versendet oder aufgrund der Komplexität des Systems gemäß Fig. 1 aufwendig generiert werden müssen. Es ist also möglich, die mehr Funktionalität zu erwirken, ohne ein komplett neues Profil 11 zu generieren und zu übertragen. Damit ist Zeit und Netzwerklast eingespart.

Im Rahmen der Erfindung können alle beschriebenen und/oder gezeichneten und/oder beanspruchten Elemente beliebig miteinander kombiniert werden.

### BEZUGSZEICHENLISTE

1 Teilnehmeridentitätsmodul, eUICC
   10a-b Profil-Dateistruktur, Issuer Security Domain, ISD-P
   11a-c Subskriptions-Profile,
   1110 Markierter Teil der Profil-Dateistruktur
   12 Herausgebersicherheitsbereich-UICC-basiert, Issuer Security Domain, ISD-R
2 Subskriptions-Server
   2a Serverkomponente, Subscription Manager Secure Routing, SM-SR
   2b Serverkomponente, Subscription Manager Data Preparation, SM-DP
3 Mobilfunknetzbetreiber, Mobile Network Operator, MNO
4 Zertifikatsherausgeber, CI
5 eUICC Hersteller, EUM
6 Endgerät
101-110 Verfahrensschritte im Teilnehmeridentitätsmodul, eUICC
201-206 Verfahrensschritte im Subskriptions-Server
ES1-ES8 Schnittstellen

## Patentansprüche

1. Ein Verfahren (200) zum Bereitstellen von Subskriptions-Profilen (11a, 11b, 11x) an ein Teilnehmeridentitätsmodul (1) mittels eines Subskriptions-Servers (2), wobei der Subskriptions-Server (2) Kenntnis über ein im Teilnehmeridentitätsmodul (1) installiertes erstes Subskriptions-Profil (11a) aufweisend eine erste Profil-Dateistruktur (10a) und in der ersten Profil-Dateistruktur (10a) abgespeicherte erste Profil-Daten hat, wobei im Subskriptions-Server (2) die folgenden Verfahrensschritte ablaufen:
- Markieren (201) zumindest eines Teils (1110) einer zweiten Profil-Dateistruktur (10b) eines zweiten Subskriptions-Profils (11b); und
- Senden (202) des zweiten Subskriptions-Profils (11b) zum Teilnehmeridentitätsmodul (1), wobei der markierte Teil (1110) des zweiten Subskriptions-Profils (11b) ohne zweite Profil-Daten gesendet wird, wobei im Senden-Schritt (202) diejenigen ersten Profil-Daten des ersten Subskriptions-Profils (11a) angegeben werden, die zu kopieren sind, um als zweite Profil-Daten in den markierten Teil (1110) der zweiten Profil-Dateistruktur (10b) des zweiten Subskriptions-Profils (11b) abgespeichert zu werden.

2. Das Verfahren (200) nach Anspruch 1, wobei das Verfahren weiter umfasst:
- Empfangen (203) einer Bestätigung vom Teilnehmeridentitätsmodul (1), dass die diejenigen ersten Profil-Daten kopiert wurden und dass die kopierten ersten Profil-Daten in den markierten Teil (1110) der zweiten Profil-Dateistruktur (10b) des zweiten Subskriptions-Profils (11b) abgespeichert wurden;
- Senden (204) eines Profil-Aktivieren Kommandos an das Teilnehmeridentitätsmodul (1) zum Aktivieren des zweiten Subskriptions-Profils (11b).

3. Das Verfahren (200) nach Anspruch 1 oder 2, wobei das Verfahren weiter umfasst:
- Senden (206) eines Löschen-Kommandos an das Teilnehmeridentitätsmodul (1) zum Löschen zumindest der ersten Profil-Daten des ersten Subskriptions-Profils (11a).

4. Das Verfahren (200) nach einem der vorhergehenden Ansprüche, wobei der markierte Teil (1110) des zweiten Subskriptions-Profils (11b) zumindest eines der folgenden Elemente aufweist:
- zumindest eine Profil-Elementardatei;
- eine Teilnehmerkennung,
- eine Teilnehmeridentitätsmodulkennung;
- einen Authentisierungsschlüssel;
- einen OTA-Schlüssel;
- eine Subskription-Profil Anwendungsaktualisierung; und/oder
- eine Subskription-Profil Datei-Aktualisierung.

5. Ein Verfahren (100) zum Verwalten von Subskriptionsprofilen (11a, 11b, 11x) in einem Teilnehmeridentitätsmodul (1) wobei im Teilnehmeridentitätsmodul (1) zumindest ein erstes Subskriptions-Profil (11a) installiert ist und wobei das erste installierte Subskription-Profil (11a) eine erste Profil-Dateistruktur (10a) und in der Dateistruktur (10a) abgespeicherte erste Profil-Daten umfasst, wobei im Teilnehmeridentitätsmodul (1) die folgenden Verfahrensschritte ablaufen:
- Empfangen (102) eines zweiten Subskriptions-Profils (11b) mit zumindest teilweiser markierter zweiter Profil-Dateistruktur (10b) von einem Subskriptions-Server (2) unter Angabe von ersten Profil-Daten des ersten Subskriptions-Profils (11a), die zu kopieren sind und als zweite Profil-Daten in die zweite Profil-Dateistruktur (10b) des zweiten Subskriptions-Profils (11b) abzuspeichern sind, wobei der markierte Teil (1110) der zweiten Profil-Dateistruktur (10b) des zweiten Subskriptions-Profils (11b) vom Subskriptions-Server (2) ohne zweite Profil-Daten gesendet wurde,
- Kopieren (103) der angegebenen ersten Profil-Daten des ersten Subskriptions-Profils (11a);
- Abspeichern (104) der kopierten angegebenen ersten Profil-Daten in den markierten Teil (1110) der zweiten Profil- Dateistruktur (10b) des zweiten Subskriptions-Profils (11b), um das zweite Subskriptions-Profil (11b) zu vervollständigen, wodurch das zweite Subskription-Profil (11b) eingerichtet ist.

6. Das Verfahren (100) nach Anspruch 5, wobei das Verfahren weiter umfasst:
- Senden (105) einer Bestätigung an den Subskriptions-Server (2), dass die angegeben ersten Profil-Daten in den markierten Teil (1110) der zweiten Profil-Dateistruktur (10b) des zweiten Subskriptions-Profils (11b) abgespeichert wurden,
- Empfangen (106) eines Profil-Aktivieren Kommandos vom Subskriptions-Server (2) zum Aktivieren des zweiten Subskriptions-Profils (11b); und
- Aktivieren des zweiten Subskriptions-Profils (11b) unter Deaktivieren des ersten Sub skriptions-Profils.

7. Das Verfahren (100) nach Anspruch 6, wobei das Verfahren weiter umfasst:
- Empfangen eines Löschen-Kommandos vom Subskriptions-Server (2) zum Löschen (110) zumindest der ersten Profil-Daten des ersten Subskriptions-Profils (11a).

8. Das Verfahren (100) nach einem der vorhergehenden Ansprüche 5 bis 7, wobei das Kopieren (103) der angegebenen ersten Profil-Daten und das Abspeichern (104) der kopierten angegebenen ersten Profil-Daten in die zweite Profil-Dateistruktur (10b) des zweiten Subskriptions-Profils (11b) ohne ein Übertragung von Daten, insbesondere Profil-Daten, zwischen dem Teilnehmeridentitätsmodul (1) und dem Subskriptions-Server (2) durchgeführt wird.

9. Das Verfahren (100) nach einem der vorhergehenden Ansprüche, wobei die Verfahrensschritte eine Erstellen-Funktion und/oder eine Aktivieren-Funktion und/oder eine Deaktivieren-Funktion gemäß der technischen Spezifikation SGP02-Remote-Provisioning-Architecture-for-Embedded-UICC, Version 2.0 umfassen.

10. Ein Teilnehmeridentitätsmodul (1), eingerichtet für ein oder umfassend ein im Teilnehmeridentitätsmodul (1) installiertes erstes Subskriptions-Profil (11a), wobei das erste installierte Subskription-Profil (11a) eine erste Profil-Dateistruktur (10a) und in der Dateistruktur abgespeicherte erste Profil-Daten umfasst,
**gekennzeichnet durch**
eine Kopier- und Abspeicher-Funktion, die dazu eingerichtet ist, nach einem Empfangen (102) eines zweiten Subskriptions-Profils (11b) mit zumindest teilweiser markierter zweiter Profil-Dateistruktur (10b) von einem Subskriptions-Server (2) unter Angabe von ersten Profil-Daten des ersten Subskriptions-Profils (11a), wobei der markierte Teil (1110) der zweiten Profil-Dateistruktur (10b) des zweiten Subskriptions-Profils (11b) vom Subskriptions-Server (2) ohne zweite Profil-Daten gesendet wurde, die angegebenen ersten Profil-Daten des ersten Subskriptions-Profils (11a) in den markierten Teil (1110) der zweiten Profil-Dateistruktur (10b) des zweiten Subskriptions-Profils (11b) zu kopieren, um das zweite Subskriptions-Profil (11b) zu vervollständigen, wodurch das zweite Subskriptions-Profil (11b) im Teilnehmeridentitätsmodul (1) eingerichtet ist.

11. Das Teilnehmeridentitätsmodul (1) gemäß Anspruch 10, wobei die Kopier- und Abspeicher-Funktion durch eine Funktionalität des Betriebssystems realisiert ist oder alternativ durch ein Applet realisiert ist, welches eingerichtet ist, nach dem Empfangen (102) des zweiten Subskriptions-Profils (11b) zu starten.

12. Das Teilnehmeridentitätsmodul (1) gemäß Anspruch 10 oder 11, weiter umfassend:
- einen Datenspeicher zum Abspeichern der Subskriptions-Profile (11a, 11b, 11x),
- eine Schnittstelle (ES5, ES8), eingerichtet zur Kommunikation mit dem Subskriptions-Server (2);
- eine Schnittstelle (ES6), eingerichtet zur Kommunikation mit einem Netzwerk-Server (3); und
- Mittel, die eingerichtet sind, das Verfahren (100) gemäß einer der Ansprüche 5 bis 9 durchzuführen.

13. Ein Subskriptions-Server (2) eingerichtet zum Bereitstellen von Subskriptions-Profilen (11a, 11b, 11x) an ein Teilnehmeridentitätsmodul (1), wobei der Subskriptions-Server (2) Kenntnis über ein im Teilnehmeridentitätsmodul (1) installiertes erstes Subskriptions-Profil (11a) aufweisend eine erste Profil-Dateistruktur (10a) und in der ersten Profil-Dateistruktur (10a) abgespeicherte erste Profil-Daten hat,
**gekennzeichnet durch:**
eine Markier-Funktion, die dazu eingerichtet ist, zumindest einen Teil (1110) einer zweiten Profil-Dateistruktur (10b) eines zweiten Subskriptions-Profils (11b) zu markieren eine Sende-Funktion, die dazu eingerichtet ist, das zweite Subskriptions-Profil (11b) zu senden,
wobei der markierte Teil (1110) des zweiten Subskriptions-Profils (11b) ohne zweite Profil-Daten gesendet wird, wobei die Sende-Funktion diejenigen ersten Profil-Daten des ersten Subskriptions-Profils (11a) angibt, die zu kopieren sind, um als zweite Profil-Daten in den markierten Teil (1110) der zweiten Profil-Dateistruktur (10b) des zweiten Subskriptions-Profils (11b) abgespeichert zu werden.

14. Der Subskriptions-Server (2) nach Anspruch 13, weiter umfassend:
- eine Erkennen-Funktion, die dazu eingerichtet ist, den zu markierenden Teil (1110) der zweiten Dateistruktur (10b) zu erkennen,
- eine Schnittstelle (ES5, ES8), eingerichtet zur Kommunikation mit dem Teilnehmeridentitätsmodul (1);
- eine Schnittstelle (ES6), eingerichtet zur Kommunikation mit einem Netzwerk-Server (3);
- Mittel, die eingerichtet sind, das Verfahren (200) gemäß einer der Ansprüche 1 bis 4 und 9 durchzuführen.

15. Ein Computerprogramprodukt ausführbar installiert in einem Teilnehmeridentitätsmodul (1), das die Verfahrensschritte eines der Ansprüche 5 bis 9 ausführt, wenn das Computerprogrammprodukt auf dem Teilnehmeridentitätsmodul ausgeführt wird.

## Claims

1. Method (200) for providing subscription profiles (11a, 11b, 11x) to a subscriber identity module (1) by means of a subscription server (2), wherein the subscription server (2) has knowledge about a first subscription profile (11a) installed in the subscriber identity module (1) and having a first profile file structure (10a) and first profile data stored in the first profile file structure (10a), wherein the following method steps proceed in the subscription server (2):
- marking (201) at least one part (1110) of a second profile file structure (10b) of a second subscription profile (11b); and
- transmitting (202) the second subscription profile (11b) to the subscriber identity module (1), wherein the marked part (1110) of the second subscription profile (11b) is transmitted without second profile data, wherein in the transmitting step (202) those first profile data of the first subscription profile (11a) which are to be copied are specified in order to be stored as second profile data in the marked part (1110) of the second profile file structure (10b) of the second subscription profile (11b).

2. Method (200) according to Claim 1, wherein the method further comprises:
- receiving (203) a confirmation from the subscriber identity module (1) that those first profile data have been copied and that the copied first profile data have been stored in the marked part (1110) of the second profile file structure (10b) of the second subscription profile (11b);
- transmitting (204) a profile activating command to the subscriber identity module (1) for activating the second subscription profile (11a).

3. Method (200) according to Claim 1 or 2, wherein the method further comprises:
- transmitting (206) a deleting command to the subscriber identity module (1) for deleting at least the first profile data of the first subscription profile (11a).

4. Method (200) according to any of the preceding claims, wherein the marked part (1110) of the second subscription profile (11b) has at least one of the following elements:
- at least one profile elementary file;
- a subscriber identifier;
- a subscriber identity module identifier;
- an authentication key;
- an OTA key;
- a subscription profile application update; and/or
- a subscription profile file update.

5. Method (100) for managing subscription profiles (11a, 11b, 11x) in a subscriber identity module (1), wherein at least one first subscription profile (11a) is installed in the subscriber identity module (1) and wherein the first installed subscription profile (11a) comprises a first profile file structure (10a) and first profile data stored in the file structure (10a), wherein the following method steps proceed in the subscriber identity module (1):
- receiving (102) a second subscription profile (11b) with an at least partial marked second profile data structure (10b) from a subscription server (2) with specification of first profile data of the first subscription profile (11a) which are to be copied and are to be stored as second profile data in the second profile file structure (10b) of the second subscription profile (11b), wherein the marked part (1110) of the second profile data structure (10b) of the second subscription profile (11b) has been transmitted from the subscription server (2) without second profile data;
- copying (103) the specified first profile data of the first subscription profile (11a);
- storing (104) the copied specified first profile data in the marked part (1110) of the second profile file structure (10b) of the second subscription profile (11b) in order to complete the second subscription profile (11b), whereby the second subscription profile (11b) is set up.

6. Method (100) according to Claim 5, wherein the method further comprises:
- transmitting (105) a confirmation to the subscription server (2) that the specified first profile data have been stored in the marked part (1110) of the second profile file structure (10b) of the second subscription profile (11b),
- receiving (106) a profile activating command from the subscription server (2) for activating the second subscription profile (11b); and
- activating the second subscription profile (11b) while deactivating the first subscription profile.

7. Method (100) according to Claim 6, wherein the method further comprises:
- receiving a deleting command from the subscription server (2) for deleting (110) at least the first profile data of the first subscription profile (11a).

8. Method (100) according to any of the preceding Claims 5 to 7, wherein copying (103) the specified first profile data and storing (104) the copied specified first profile data in the second profile file structure (10b) of the second subscription profile (11b) are carried out without transfer of data, in particular profile data, between the subscriber identity module (1) and the subscription server (2).

9. Method (100) according to any of the preceding claims, wherein the method steps comprise a creating function and/or an activating function and/or a deactivating function in accordance with the technical specification SGP02 Remote Provisioning Architecture for Embedded UICC, version 2.0.

10. Subscriber identity module (1), set up for or comprising a first subscription profile (11a) installed in the subscriber identity module (1), wherein the first installed subscription profile (11a) comprises a first profile file structure (10a) and first profile data stored in the file structure,
**characterized by**
a copying and storing function, which is set up, after receiving (102) a second subscription profile (11b) with an at least partial marked second profile data structure (10b) from a subscription server (2) with specification of first profile data of the first subscription profile (11a), wherein the marked part (1110) of the second profile data structure (10b) of the second subscription profile (11b) has been transmitted from the subscription server (2) without second profile data, to copy the specified first profile data of the first subscription profile (11a) into the marked part (1110) of the second profile file structure (10a) of the second subscription profile (11b) in order to complete the second subscription profile (11b), whereby the second subscription profile (11b) is set up in the subscriber identity module (1).

11. Subscriber identity module (1) according to Claim 10, wherein the copying and storing function is realized by a functionality of the operating system, or alternatively is realized by an applet, which is set up to start after receiving (102) the second subscription profile (11b).

12. Subscriber identity module (1) according to Claim 10 or 11, further comprising:
- a data memory for storing the subscription profiles (11a, 11b, 11x),
- an interface (ES5, ES8), set up for communication with the subscription server (2);
- an interface (ES6), set up for communication with a network server (3); and
- means set up to carry out the method (100) according to any of Claims 5 to 9.

13. Subscription server (2) set up for providing subscription profiles (11a, 11b, 11x) to a subscriber identity module (1), wherein the subscription server (2) has knowledge about a first subscription profile (11a) installed in the subscriber identity module (1) and having a first profile file structure (10a) and first profile data stored in the first profile file structure (10a),
**characterized by:**
a marking function, set up to mark at least one part (1110) of a second profile file structure (10b) of a second subscription profile (11b),
a transmitting function, set up to transmit the second subscription profile (11b), wherein the marked part (1110) of the second subscription profile (11b) is transmitted without second profile data, wherein the transmitting function specifies those first profile data of the first subscription profile (11a) which are to be copied in order to be stored as second profile data in the marked part (1110) of the second profile file structure (10b) of the second subscription profile (11b).

14. Subscription server (2) according to Claim 13, further comprising:
- a recognizing function, set up to recognize the part (1110) to be marked of the second file structure (10b),
- an interface (ES5, ES8), set up for communication with the subscriber identity module (1);
- an interface (ES6), set up for communication with a network server (3);
- means set up to carry out the method (200) according to any of Claims 1 to 4 and 9.

15. Computer program product executably installed in a subscriber identity module (1), which executes the method steps of any of Claims 5 to 9 when the computer program product is executed on the subscriber identity module.

## Revendications

1. Procédé (200) de mise à disposition de profils d'abonnement (11a, 11b, 11x) au niveau d'un module d'identité d'abonné (1) au moyen d'un serveur d'abonnement (2), le serveur d'abonnement (2) ayant connaissance d'un premier profil d'abonnement (11a), installé dans le module d'identité d'abonné (1) et présentant une première structure de fichier de profil (10a) et des premières données de profil enregistrées dans la première structure de fichier de profil (10a), les étapes suivantes du procédé étant exécutées dans le serveur d'abonnement (2) :
- marquage (201) d'au moins une partie (1110) d'une deuxième structure de fichier de profil (10b) d'un deuxième profil d'abonnement (11b) ; et
- envoi (202) du deuxième profil d'abonnement (11b) au module d'identité d'abonné (1), la partie (1110) marquée du deuxième profil d'abonnement (11b) étant envoyée sans deuxièmes données de profil, les premières données de profil du premier profil d'abonnement (11a) indiquées dans l'étape d'envoi (202) étant celles qui sont à copier pour être enregistrées en tant que deuxièmes données de profil dans la partie (1110) marquée de la deuxième structure de fichier de profil (10b) du deuxième profil d'abonnement (11b).

2. Procédé (200) selon la revendication 1, le procédé comprenant en outre :
- réception (203) d'une confirmation du module d'identité d'abonné (1) selon laquelle les premières données de profil concernées ont été copiées et que les premières données de profil ont été enregistrées dans la partie (1110) marquée de la deuxième structure de fichier de profil (10b) du deuxième profil d'abonnement (11b) ;
- envoi (204) d'une instruction d'activation de profil au module d'identité d'abonné (1) afin d'activer le deuxième profil d'abonnement (11a).

3. Procédé (200) selon la revendication 1 ou 2, le procédé comprenant en outre :
- envoi (206) d'une instruction d'effacement au module d'identité d'abonné (1) afin d'effacer au moins les premières données de profil du premier profil d'abonnement (11a).

4. Procédé (200) selon l'une des revendications précédentes, la partie (1110) marquée du deuxième profil d'abonnement (11b) présentant au moins l'un des éléments suivants :
- au moins un fichier élémentaire de profil ;
- un identificateur d'abonné ;
- un identificateur de module d'identité d'abonné ;
- une clé d'authentification ;
- une clé OTA ;
- une mise à jour d'application de profil d'abonnement ; et/ou
- une mise à jour de fichier de profil d'abonnement.

5. Procédé (100) de gestion de profils d'abonnement (11a, 11b, 11x) dans un module d'identité d'abonné (1), au moins un premier profil d'abonnement (11a) étant installé dans le module d'identité d'abonné (1) et le premier profil d'abonnement (11a) installé comprenant une première structure de fichier de profil (10a) et des premières données de profil enregistrées dans la structure de fichier (10a), les étapes suivantes du procédé étant exécutées dans le module d'identité d'abonné (1) :
- réception (102) d'un deuxième profil d'abonnement (11b) ayant une deuxième structure de données de profil (10b) au moins partiellement marquée en provenance d'un serveur d'abonnement (2) en indiquant des premières données de profil du premier profil d'abonnement (11a) qui sont à copier et à enregistrer en tant que deuxièmes données de profil dans la deuxième structure de fichier de profil (10b) du deuxième profil d'abonnement (11b), la partie (1110) marquée de la deuxième structure de données de profil (10b) du deuxième profil d'abonnement (11b) ayant été envoyée par le serveur d'abonnement (2) sans deuxièmes données de profil ;
- copie (103) des premières données de profil indiquées du premier profil d'abonnement (11a);
- enregistrement (104) des premières données de profil indiquées dans la partie (1110) marquée de la deuxième structure de fichier de profil (10b) du deuxième profil d'abonnement (11b) afin de compléter le deuxième profil d'abonnement (11b), moyennant quoi le deuxième profil d'abonnement (11b) est établi.

6. Procédé (100) selon la revendication 5, le procédé comprenant en outre :
- envoi (105) d'une confirmation au serveur d'abonnement (2), selon laquelle les premières données de profil indiquées dans la partie (1110) marquée de la deuxième structure de fichier de profil (10b) du deuxième profil d'abonnement (11b) ont été enregistrées ;
- réception (106) d'une instruction activation de profil de la part du serveur d'abonnement (2) afin d'activer le deuxième profil d'abonnement (11b) ; et
- activation du deuxième profil d'abonnement (11b) en désactivant le premier profil d'abonnement.

7. Procédé (100) selon la revendication 6, le procédé comprenant en outre :
- réception d'une instruction d'effacement de la part du serveur d'abonnement (2) afin d'effacer (110) au moins les premières données de profil du premier profil d'abonnement (11a).

8. Procédé (100) selon l'une des revendications précédentes 5 à 7, la copie (103) des premières données de profil indiquées et l'enregistrement (104) des premières données de profil indiquées dans la deuxième structure de fichier de profil (10b) du deuxième profil d'abonnement (11b) étant effectués dans une transmission de données, notamment de données de profil, entre le module d'identité d'abonné (1) et le serveur d'abonnement (2) .

9. Procédé (100) selon l'une des revendications précédentes, les étapes du procédé comprenant une fonction de création et/ou une fonction d'activation et/ou une fonction de désactivation selon la spécification technique SGP02-Remote-Provisioning-Architecture-for-Embedded-UICC (Architecture de fourniture à distance pour UICC incorporé), Version 2.0.

10. Module d'identité d'abonné (1), conçu pour un ou comprenant un premier profil d'abonnement (11a) installé dans le module d'identité d'abonné (1), le premier profil d'abonnement (11a) installé comprenant une première structure de fichier de profil (10a) et des premières données de profil enregistrées dans la structure de fichier,
**caractérisé par**
une fonction de copie et d'enregistrement, qui est conçue pour, après une réception (102) d'un deuxième profil d'abonnement (11b) avec une deuxième structure de données de profil (10b) au moins partiellement marquée en provenance d'un serveur d'abonnement (2) en indiquant des premières données de profil du premier profil d'abonnement (11a), la partie (1110) marquée de la deuxième structure de données de profil (10b) du deuxième profil d'abonnement (11b) ayant été envoyée par le serveur d'abonnement (2) sans deuxièmes données de profil, copier les premières données de profil indiquées du premier profil d'abonnement (11a) dans la partie (1110) marquée de la deuxième structure de fichier de profil (10a) du deuxième profil d'abonnement (11b) afin de compléter le deuxième profil d'abonnement (11b), moyennant quoi le deuxième profil d'abonnement (11b) est établi dans le module d'identité d'abonné (1).

11. Module d'identité d'abonné (1) selon la revendication 10, la fonction de copie et d'enregistrement étant réalisée par une fonctionnalité du système d'exploitation ou, en variante, par une application, qui est conçue pour démarrer après la réception (102) du deuxième profil d'abonnement (11b).

12. Module d'identité d'abonné (1) selon la revendication 10 ou 11, comprenant en outre :
- une mémoire de données destinée à enregistrer les profils d'abonnement (11a, 11b, 11x) ;
- une interface (ES5, ES8), conçue pour la communication avec le serveur d'abonnement (2) ;
- une interface (ES6), conçue pour la communication avec un serveur de réseau (3) ; et
- des moyens qui sont conçus pour mettre en œuvre le procédé (100) selon l'une des revendications 5 à 9.

13. Serveur d'abonnement (2), conçu pour mettre à disposition des profils d'abonnement (11a, 11b, 11x) au niveau d'un module d'identité d'abonné (1), le serveur d'abonnement (2) ayant connaissance d'un premier profil d'abonnement (11a), installé dans le module d'identité d'abonné (1) et présentant une première structure de fichier de profil (10a) et des premières données de profil enregistrées dans la première structure de fichier de profil (10a),
**caractérisé par** :
une fonction de marquage, qui est conçue pour marquer au moins une partie (1110) d'une deuxième structure de fichier de profil (10b) d'un deuxième profil d'abonnement (11b) ;
une fonction d'envoi, qui est conçue pour envoyer le deuxième profil d'abonnement (11b), la partie (1110) marquée du deuxième profil d'abonnement (11b) étant envoyée sans deuxièmes données de profil, la fonction d'envoi indiquant les premières données de profil du premier profil d'abonnement (11a) qui sont à copier pour être enregistrées en tant que deuxièmes données de profil dans la partie (1110) marquée de la deuxième structure de fichier de profil (10b) du deuxième profil d'abonnement (11b).

14. Serveur d'abonnement (2) selon la revendication 13, comprenant en outre :
- une fonction de reconnaissance, qui est conçue pour reconnaître la partie (1110) marquée de la deuxième structure de fichier (10b) ;
- une interface (ES5, ES8), conçue pour la communication avec le module d'identité d'abonné (1) ;
- une interface (ES6), conçue pour la communication avec un serveur de réseau (3) ;
- des moyens qui sont conçus pour mettre en œuvre le procédé (200) selon l'une des revendications 1 à 4 et 9.

15. Produit de programme informatique installé de manière exécutable dans un module d'identité d'abonné (1), qui exécute les étapes du procédé selon l'une des revendications 5 à 9 lorsque le produit de programme informatique est exécuté sur le module d'identité d'abonné.
